# EUROPÄISCHE PATENTANMELDUNG

(11) **EP 0 889 098 A2**
(43) Veröffentlichungstag der Anmeldung: **07.01.1999**
(21) Anmeldenummer: 98810573.0
(22) Anmeldetag: 23.06.1998
(51) Int. Cl.: C09B 62/09, C09B 62/475, C09B 62/513, C09B 43/16, C09B 62/01, C09D 11/02

(54) **Azofarbstoffe, Verfahren zu deren Herstellung und deren Verwendung**

(30) Priorität: 02.07.1997 CH 1606/97
(71) Anmelder: Ciba Specialty Chemicals Holding Inc., 4057 Basel (CH)
(72) Erfinder: Lauk, Urs, 8047 Zürich (CH); Nowack, Patric, 79540 Lörrach (DE)

(57) **Zusammenfassung**

Azofarbstoffe der Formel (1) 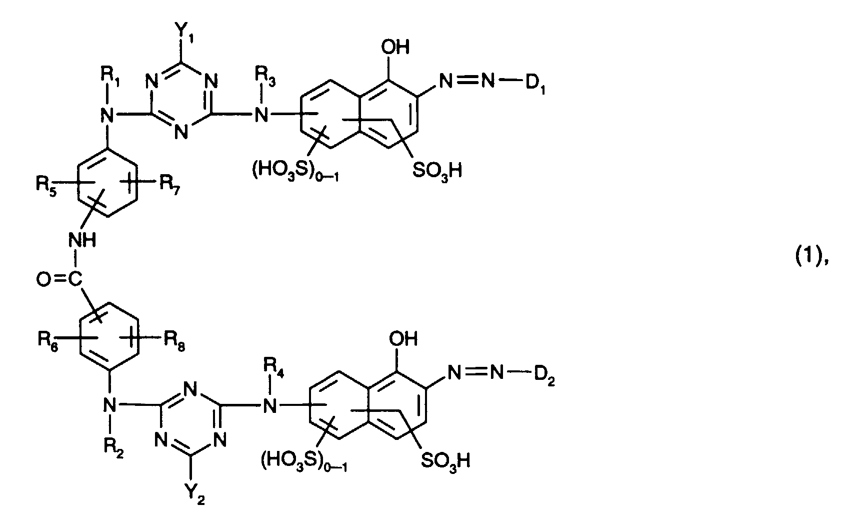 dadurch gekennzeichnet, dass
R₁, R₂, R₃ und R₄ unabhängig voneinander Wasserstoff oder gegebenenfalls substituiertes C₁-C₄-Alkyl sind,
R₅, R₆, R₇ und R₈ unabhängig voneinander je Wasserstoff, C₁-C₄-Alkyl, C₁-C₄-Alkoxy, Halogen oder Sulfo bedeuten,
D₁ und D₂ unabhängig voneinander je einen Rest der Benzol- oder Naphthalinreihe bedeuten, und
Y₁ und Y₂ unabhängig voneinander je Halogen, gegebenenfalls substituiertes Amino, Morpholino, Piperidin-1-yl oder gegebenenfalls am Stickstoff substituiertes Piperazin-1-yl sind,
mit der Massgabe, dass D₁ und D₂ nicht gleichzeitig Sulfophenyl bedeuten, falls Y₁ und Y₂ Chlor und R₅, R₆, R₇ und R₈ Wasserstoff sind, sind Farbstoffe für verschieden Substrate, insbesondere cellulosische Fasermaterialien. Sie sind hochtemperaturstabil und eignen sich deshalb besonders gut zum einbadigen, einstufigen Färben von Polyester/Baumwoll-Mischgeweben mit einem Dispersionsfarbstoff für die Polyesterfasern unter den Färbebedingungen für Polyesterfasern.

## Beschreibung

Die vorliegende Erfindung betrifft neue Azofarbstoffe, Verfahren zu deren Herstellung sowie deren Verwendung zum Färben und Bedrucken von Fasermaterialien, insbesondere von textilen Fasermaterialien.

Die der vorliegenden Erfindung zugrunde liegende Aufgabe war es, Farbstoffe zu finden, welche zum Färben von stickstoffhaltigen und hydroxygruppenhaltigen Fasermaterialien, insbesondere von cellulosischen Fasermaterialien, geeignet sind, gute Echtheitseigenschaften aufweisen und hochtemperaturstabil sind.

Es wurde nun gefunden, dass die nachstehenden Azofarbstoffe diesen Anforderungen genügen.

Gegenstand der vorliegenden Erfindung sind Azofarbstoffe der Formel (1) 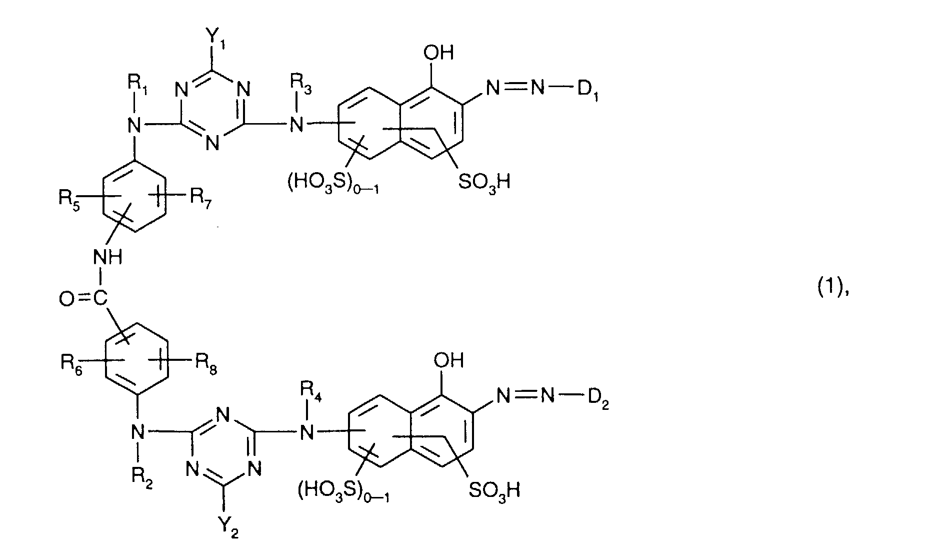 dadurch gekennzeichnet, dass
R₁, R₂, R₃ und R₄ unabhängig voneinander je Wasserstoff oder gegebenenfalls substituiertes C₁-C₄-Alkyl sind,
R₅, R₆, R₇ und R₈ unabhängig voneinander je Wasserstoff, C₁-C₄-Alkyl, C₁-C₄-Alkoxy, Halogen oder Sulfo bedeuten,
D₁ und D₂ unabhängig voneinander je einen Rest der Benzol- oder Naphthalinreihe bedeuten, und
Y₁ und Y₂ unabhängig voneinander je Halogen, gegebenenfalls substituiertes Amino, Morpholino, Piperidin-1-yl oder gegebenenfalls am Stickstoff substituiertes Piperazin-1-yl sind,
mit der Massgabe, dass D₁ und D₂ nicht gleichzeitig Sulfophenyl bedeuten, falls Y₁ und Y₂ Chlor und R₅, R₆, R₇ und R₈ Wasserstoff sind.

Als C₁-C₄-Alkyl kommen für R₁, R₂, R₃ und R₄ unabhängig voneinander z.B. Methyl, Aethyl, Propyl, Isopropyl, Butyl, sek.-Butyl, tert.-Butyl oder Isobutyl in Betracht. Die genannten Alkylreste können unsubstituiert oder z.B. durch Hydroxy, Sulfo, Sulfato, Cyano oder Carboxy substituiert sein. Bevorzugt als Alkylreste sind die entsprechenden unsubstituierten Reste.

Als C₁-C₄-Alkyl kommen für R₅, R₆, R₇ und R₈ unabhängig voneinander z.B. Methyl, Aethyl, Propyl, Isopropyl, Butyl, sek.-Butyl, tert.-Butyl oder Isobutyl, insbesondere Methyl oder Aethyl, vorzugsweise Methyl, in Betracht.

Als C₁-C₄-Alkoxy kommen für R₅, R₆, R₇ und R₈ unabhängig voneinander z.B. Methoxy, Aethoxy, Propoxy, lsopropoxy, Butoxy oder lsobutoxy, insbesondere Methoxy, in Betracht.

Als Halogen kommt für R₅, R₆, R₇ und R₈ unabhängig voneinander z.B. Fluor, Chlor oder Brom, insbesondere Chlor, in Betracht.

Die Reste D₁ und D₂ sind unsubstituiert oder substituiert.

Als Substituenten der Reste D₁ oder D₂ kommen die für Azofarbstoffe üblichen Substituenten in Betracht. Als Beispiele seien die folgenden genannt: C₁-C₄-Alkyl, worunter Methyl, Aethyl, n- oder iso-Propyl, n-, iso-, sec.- oder tert.-Butyl zu verstehen ist; C₁-C₄-Alkoxy, worunter Methoxy, Aethoxy, n- oder iso-Propoxy oder n-, iso-, sec.- oder tert.-Butoxy zu verstehen ist; wobei diese Bedeutungen auch für die nachfolgend genannten C₁-C₄-Alkyl- und C₁-C₄-Alkoxyreste gelten; Hydroxy-C₁-C₄-Alkoxy; Phenoxy; gegebenenfalls im Alkylteil durch Hydroxy oder C₁-C₄-Alkoxy substituiertes C₂-C₆-Alkanoylamino, wie z.B. Acetylamino, Hydroxyacetylamino, Methoxyacetylamino oder Propionylamino; gegebenenfalls im Phenylteil durch Hydroxy, Sulfo, Halogen, C₁-C₄-Alkyl oder C₁-C₄-Alkoxy substituiertes Benzoylamino; gegebenenfalls im Alkylteil durch Hydroxy, C₁-C₄-Alkyl oder C₁-C₄-Alkoxy substituiertes C₂-C₆-Alkoxycarbonylamino; gegebenenfalls im Phenylteil durch Hydroxy, C₁-C₄-Alkyl oder C₁-C₄-Alkoxy substituiertes Phenoxycarbonylamino; Amino; gegebenenfalls im Alkylteil durch Hydroxy, C₁-C₄-Alkoxy, Carboxy, Cyano, Halogen, Sulfo, Sulfato, Phenyl oder Sulfophenyl substituiertes N-C₁-C₄-Alkyl- oder N,N-Di-C₁-C₄-Alkylamino, wie z.B. Methylamino, Aethylamino, N,N-Dimethylamino, N,N-Diethylamino, β-Cyanoethylamino, β-Hydroxyethylamino, N,N-Di-β-Hydroxyethylamino, β-Sulfoethylamino, γ-Sulfo-n-propylamino, β-Sulfatoethylamino, N-Ethyl-N-(3-Sulfobenzyl)-amino, N-(β-Sulfoethyl)-N-benzylamino; Cyclohexylamino; gegebenenfalls im Phenylteil durch Nitro, C₁-C₄-Alkyl, C₁-C₄-Alkoxy, Carboxy, Halogen oder Sulfo substituiertes N-Phenylamino oder N-C₁-C₄-Alkyl-N-phenylamino; C₂-C₄-Alkoxycarbonyl, z.B. Methoxy- oder Aethoxycarbonyl; Trifluoromethyl; Nitro; Cyano; Halogen, worunter generell z.B. Fluor, Brom oder insbesondere Chlor zu verstehen ist; Ureido; Hydroxy; Carboxy; Sulfo; Sulfomethyl; Carbamoyl; Carbamido; Sulfamoyl; gegebenenfalls im Phenylteil durch Sulfo oder Carboxy substituiertes N-Phenylsulfamoyl oder N-C₁-C₄-Alkyl-N-phenylsulfamoyl; Methyl- oder Aethylsulfonyl.

Als Substituenten der Reste D₁ oder D₂ kommen auch faserreaktive Reste in Betracht.

Faserreaktive Reste sind beispielsweise ein durch ein abspaltbares Atom oder eine abspaltbare Gruppe substituierter Alkanoyl- oder Alkylsulfonylrest, ein gegebenenfalls durch ein abspaltbares Atom oder eine abspaltbare Gruppe substituierter Alkenoyl- oder Alkensulfonylrest oder ein eine Vinylgruppe enthaltender Alkenoyl- oder Alkensulfonylrest. Die genannten Alkanoyl-, Alkylsulfonyl- und Alkensulfonylreste enthalten in der Regel 2 bis 8 Kohlenstoffatome und die Alkenoylreste in der Regel 3 bis 8 Kohlenstoffatome. Des weiteren sind durch ein abspaltbares Atom oder eine abspaltbare Gruppe substituierte carbo- oder heterocyclische 4-, 5- oder 6-Ringe enthaltende Reste zu nennen. Als heterocyclische Reste kommen z.B. solche in Betracht, welche mindestens einen abspaltbaren Substituenten an einen heterocyclischen Rest gebunden enthalten; unter anderem solche, die mindestens einen reaktiven Substituenten an einen 5- oder 6-gliedrigen heterocyclischen Ring gebunden enthalten, wie an einen Monoazin-, Diazin-, Triazin-, Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatische Ringe aufweist, wie ein Chinolin-, Phthalazin-, Chinnolin-, Chinazolin-, Chinoxalin-, Acridin-, Phenazin- und Phenanthridin-Ring-System.

Abspaltbare Atome bzw. abspaltbare Gruppen sind neben weiteren beispielsweise Halogen, wie Fluor, Chlor oder Brom, Ammonium einschliesslich Hydrazinium, Sulfato, Thiosulfato, Phosphato, Acetoxy, Propionoxy, Azido, Carboxypyridinium oder Rhodanido.

Der faserreaktive Rest und der Farbstoffrest können durch ein Brückenglied miteinander verbunden sein. Als Brückenglied kommen neben der direkten Bindung oder beispielsweise einer Aminogruppe, die verschiedensten Reste in Betracht. Das Brückenglied ist z.B. ein aliphatischer, aromatischer oder heterocyclischer Rest; ferner kann das Brückenglied auch aus verschiedenen derartigen Resten zusammengesetzt sein. Das Brückenglied enthält in der Regel mindestens eine funktionelle Gruppe, z.B. die Carbonylgruppe oder die Aminogruppe, wobei die Aminogruppe durch gegebenenfalls durch Halogen, Hydroxy, Cyano, C₁-C₄-Akoxy, C₁-C₄-Alkoxycarbonyl, Carboxy, Sulfamoyl, Sulfo oder Sulfato substituiertes C₁-C₄-Alkyl weitersubstituiert sein kann. Als aliphatischer Rest kommt z.B. ein Alkylenrest mit 1 bis 7 Kohlenstoffatomen oder dessen verzweigte Isomere in Betracht. Die Kohlenstoffkette des Alkylenrestes kann durch ein Heteroatom, wie z.B. ein Sauerstoffatom, unterbrochen sein. Als aromatischer Rest kommt z.B. ein Phenylrest, der durch C₁-C₄-Alkyl, wie z.B. Methyl oder Aethyl, C₁-C₄-Alkoxy, wie z.B. Methoxy oder Aethoxy, Halogen, wie z.B. Fluor, Brom oder insbesondere Chlor, Carboxy oder Sulfo substituiert sein kann, und als heterocyclischer Rest z.B. ein Piperazinrest in Betracht.

Solche fasereraktiven Reste sind an sich bekannt und in grosser Zahl beschrieben z.B. in Venkataraman "The Chemistry of Synthetic Dyes" Band 6, Seiten 1-209, Academic Press, New York, London 1972 oder in der EP-A-625,549 und der US-A-5,684,138.

Als Halogen kommt für Y₁ und Y₂ unabhängig voneinander z.B. Fluor, Chlor oder Brom, vorzugsweise Fluor oder Chlor und insbesondere Chlor in Betracht.

Als gegebenenfalls substituiertes Amino kommt für Y₁ und Y₂ unabhängig voneinander beispielsweise Amino; gegebenfalls im Phenylring durch C₁-C₄-Alkyl, wie z.B. Methyl, Aethyl, n- oder iso-Propyl, n-, iso-, sec.- oder tert.-Butyl, vorzugsweise Methyl oder Aethyl, C₁-C₄-Alkoxy, wie z.B. Methoxy, Aethoxy, n- oder iso-Propoxy oder n-, iso-, sec.- oder tert.-Butoxy, vorzugsweise Methoxy oder Aethoxy, Hydroxy, Carboxy, Sulfo oder Halogen, wie z.B. Fluor, Chlor oder Brom, vorzugsweise Chlor, substituiertes Phenylamino oder N-C₁-C₄-Alkyl-N-phenylamino; gegebenenfalls im Alkylteil durch C₂-C₄-Alkanoylamino, wie beispielsweise Acetylamino, Propionylamino oder Butyrylamino, vorzugsweise Acetylamino, C₁-C₄-Alkoxy, wie z.B. Methoxy, Aethoxy, n- oder iso-Propoxy oder n-, iso-, sec.- oder tert.-Butoxy, vorzugsweise Methoxy oder Aethoxy, Hydroxy, Sulfo, Sulfato oder Carboxy substituiertes N-Mono- oder N,N-Di-C₁-C₄-Alkylamino, wie beispielsweise N-Methylamino, N-Aethylamino, N-Propylamino, N,N-Di-Methylamino oder N,N-Di-Aethylamino, N-β-Hydroxyaethylamino und N,N,-Di-β-Hydroxyaethylamino; gegebenfalls im Cycloalkylring durch C₁-C₄-Alkyl, wie z.B. Methyl, Aethyl, n- oder iso-Propyl, n-, iso-, sec.- oder tert.-Butyl, vorzugsweise Methyl substituiertes C₅-C₇-Cycloalkylamino oder Reste der Formeln (2a), (2b) oder (2c) 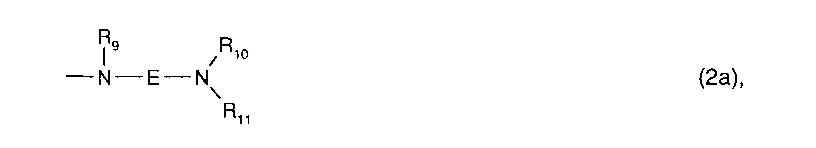 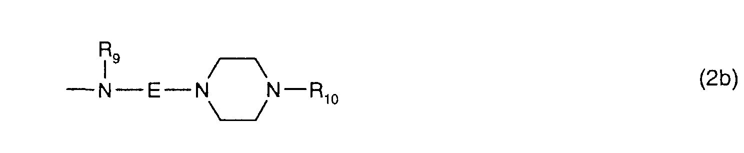 oder 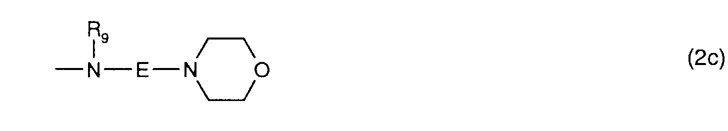 in Betracht,
worin
R₉, R₁₀ und R₁₁ unabhängig voneinander Wasserstoff oder gegebenenfalls substituiertes C₁-C₈-Alkyl sind, und
E gegebenenfalls substituiertes und gegebenenfalls durch eine oder mehrere Gruppen -O- unterbrochenes C₂-C₈-Alkylen oder gegebenenfalls substituiertes C₅-C₇-Cycloalkylen, C₅-C₇-Cycloalkylen-C₁-C₈-Alkylen oder C₁-C₈-Alkylen-C₅-C₇-Cycloalkylen ist.

Als C₁-C₈-Alkyl kommen für R₉, R₁₀ und R₁₁ unabhängig voneinander z.B. Methyl, Aethyl, Propyl, Isopropyl, Butyl, sek.-Butyl, tert.-Butyl, Isobutyl, oder geradkettiges oder verzweigtes Pentyl, Hexyl, Heptyl oder Octyl in Betracht. Die Reste R₉, R₁₀ und R₁₁ in der Bedeutung als C₁-C₈-Alkyl können z.B. durch Hydroxy, C₁-C₄-Alkoxy, Halogen, Amino oder Sulfato, insbesondere durch Hydroxy, C₁-C₄-Alkoxy oder Amino, weitersubstituiert sein.

Bevorzugt sind R₉, R₁₀ und R₁₁ unabhängig voneinander Wasserstoff oder gegebenenfalls durch Hydroxy, C₁-C₄-Alkoxy oder Amino substituiertes C₁-C₄-Alkyl.

Besonders bevorzugt sind R₉, R₁₀ und R₁₁ unabhängig voneinander Wasserstoff oder C₁-C₄-Alkyl, insbesondere Wasserstoff, Methyl oder Aethyl.

Der Rest E in der Bedeutung als C₂-C₈-Alkylen kann durch eine oder mehrere Gruppen -O-, insbesondere durch eine bis drei und vorzugsweise durch eine oder zwei Gruppen -O-, unterbrochen sein. Bevorzugt sind die nicht durch eine Gruppe -O- unterbrochenen Reste. Als mögliche Substituenten für den Rest E in der Bedeutung als C₂-C₈-Alkylen seien beispielsweise Hydroxy, C₁-C₄-Alkoxy, Halogen, Amino oder Sulfato, insbesondere Hydroxy oder C₁-C₄-Alkoxy, genannt. Als Beispiele für solche C₂-C₈-Alkylenreste seien 1,2-Aethylen, 1,2-Propylen, 1,3-Propylen sowie in 2-Stellung durch Hydroxy substituiertes 1,3-Propylen genannt.

Der Rest E in der Bedeutung als C₅-C₇-Cycloalkylen, C₅-C₇-Cycloalkylen-C₁-C₈-Alkylen oder C₁-C₈-Alkylen-C₅-C₇-Cycloalkylen kann im Alkylenrest z.B. durch Hydroxy oder C₁-C₄-Alkoxy und im Cycloalkylring z.B. durch C₁-C₄-Alkyl, insbesondere Methyl, substituiert sein. Unter Cycloalkyl wird hierbei insbesondere Cyclohexyl verstanden. Als C₅-C₇-Cycloalkylen-C₁-C₈-Alkylen und C₁-C₈-Alkylen-C₅-C₇-Cycloalkylen kommen insbesondere Cyclohexylenmethylen und Methylen-cyclohexylen in Betracht, welche im Cyclohexylring durch C₁-C₄-Alkyl substituiert sein können.

Bevorzugt handelt es sich bei dem Rest E um C₂-C₈-Alkylen, insbesondere um C₂-C₄-Alkylen, für welches die oben angegebenen Bedeutungen und Bevorzugungen gelten.

Als gegebenenfalls N-substituiertes Piperazin-1-yl kommen für Y₁ und Y₂ beispielsweise Reste der Formeln (2d) oder (2e) 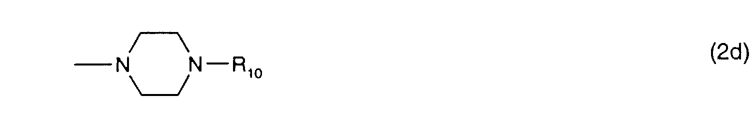 oder 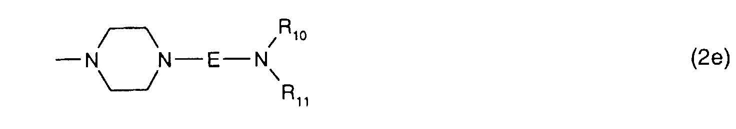 in Betracht,
worin
R₁₀, R₁₁ und E unabhängig voneinander die oben angegebenen Bedeutungen und Bevorzugungen haben.

Bevorzugt bedeuten R₁, R₂, R₃ und R₄ unabhängig voneinander je Wasserstoff oder C₁-C₄-Alkyl, insbesondere Wasserstoff.

R₅ und R₆ bedeuten bevorzugt unabhängig voneinander je Wasserstoff oder Sulfo, insbesondere Wasserstoff.

R₇ und R₈ bedeuten bevorzugt Wasserstoff.

Bevorzugte Bedeutungen für Y₁ und Y₂ unabhängig voneinander sind je Halogen, Phenylamino, gegebenenfalls im Alkylteil durch Hydroxy substituiertes N-Mono- oder N,N-DiC₁-C₄-Alkylamino, Morpholino oder je einen Rest der Formeln (2a'), (2c'), (2d') oder (2e')

―NH―E―NH₂ (2a'),

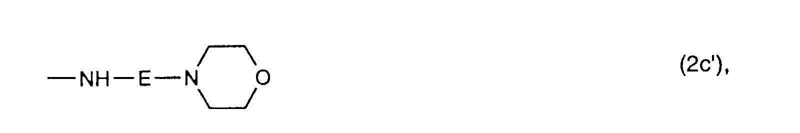

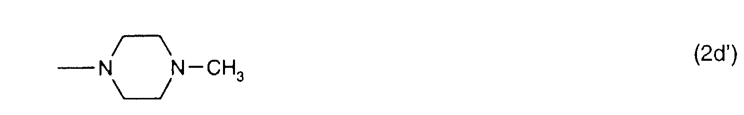

oder 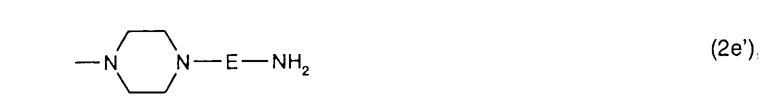 worin
E C₂-C₄-Alkylen ist.

Besonders bevorzugt sind Y₁ und Y₂ unabhängig voneinander je Halogen, Phenylamino, N-β-Hydroxyaethylamino, N,N,-Di-β-Hydroxyaethylamino, Morpholino oder je einen Rest der Formeln (2a") oder (2e")

―NH―(CH₂)_{2―3}―NH₂ (2aʺ)

oder

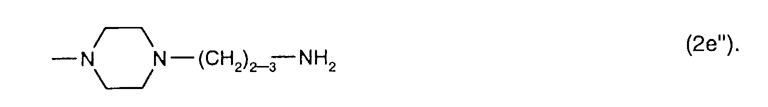

Ganz besonders bevorzugt sind Y₁ und Y₂ unabhängig voneinander Halogen, insbesondere Chlor.

Die Reste Y₁ und Y₂ haben bevorzugt identische Bedeutungen.

Die Reste D₁ und D₂ bedeuten unabhängig voneinander je einen Rest der Formeln (3) oder (4) 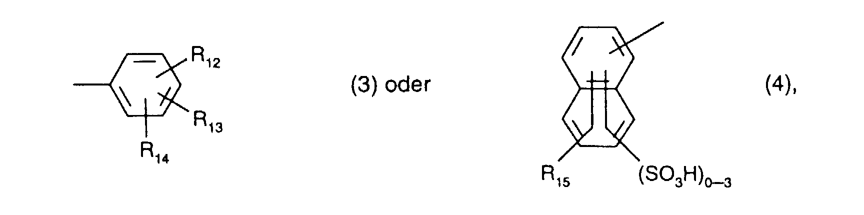 worin
R₁₂ und R₁₃ unabhängig voneinander je Wasserstoff, Halogen, C₁-C₄-Alkyl, C₁-C₄-Alkoxy, Hydroxy, Carboxy, Carbamoyl, Carbamido, Ureido, Amino, N-Mono- oder N,N-Di-C₁-C₄-Alkylamino, gegebenenfalls im Phenylring durch Nitro, C₁-C₄-Alkyl, C₁-C₄-Alkoxy oder Sulfo substituiertes Phenylamino oder N-C₁-C₄-Alkyl-N-phenylamino, gegebenfalls im Alkylteil durch C₁-C₄-Alkoxy oder Hydroxy substituiertes C₂-C₄-Alkanoylamino, gegebenenfalls im Phenylring durch C₁-C₄-Alkyl, C₁-C₄-Alkoxy, Sulfo oder Halogen substituiertes Benzoylamino oder Sulfo, vorzugsweise Wasserstoff, Halogen, C₁-C₄-Alkyl, C₁-C₄-Alkoxy, Hydroxy, Carboxy, Carbamoyl, Carbamido, Ureido, gegebenfalls im Alkylteil durch C₁-C₄-Alkoxy oder Hydroxy substituiertes C₂-C₄-Alkanoylamino, gegebenenfalls im Phenylring durch C₁-C₄-Alkyl, C₁-C₄-Alkoxy, Sulfo oder Halogen substituiertes Benzoylamino oder Sulfo, sind,
R₁₄ Wasserstoff, C₁-C₄-Alkyl, C₁-C₄-Alkoxy, Hydroxy oder einen faserreaktiven Rest, vorzugsweise Wasserstoff oder einen faserreaktiven Rest, bedeutet und
R₁₅ Wasserstoff, gegebenenfalls im Phenylring durch Nitro, C₁-C₄-Alkyl, C₁-C₄-Alkoxy oder Sulfo substituiertes Phenylamino oder N-C₁-C₄-Alkyl-N-phenylamino, Hydroxy, Nitro oder einen faserreaktiven Rest, vorzugsweise Wasserstoff, gegebenenfalls im Phenylring durch Nitro, C₁-C₄-Alkyl, C₁-C₄-Alkoxy oder Sulfo substituiertes Phenylamino, Hydroxy, Nitro oder einen faserreaktiven Rest, bedeutet.

Als faserreaktive Reste R₁₄ und R₁₅ kommen unabhängig voneinander beispielsweise die nachfolgend genannten Reste in Betracht:
Vinylsulfonyl, β-Chloraethylsulfonyl, β-Sulfatoaethylsulfonyl, β-Acetoxy-aethylsulfonyl, Phosphatoaethylsulfonyl, β-Thiosulfatoaethylsulfonyl, wobei die beispielhaft genannten Reste direkt oder über ein Brückenglied, beispielsweise -NH-, -NCH₃-, -CONH-(CH₂)₂-rea, -CONH-(CH₂)₃-*rea* oder -SO₂NH-(CH₂)₂-*rea*, an den Phenyl oder Naphthylrest gebunden sind. "*rea*" bezeichnet den Bindungsort der beispielhaft genannten Reste.

Weitere geeignete faserreaktive Reste R₁₄ und R₁₅ sind unabhängig voneinander beispielsweise Acryloyl, Mono-, Di- oder Trichloracryloyl wie -CO-CCI=CH₂, -CO-CH=CH-Cl, -CO-CCl=CH-CH₃; Mono-, Di- oder Tribromacryloyl wie -CO-CBr=CH₂, -CO-CH=CH-Br, - CO-CBr=CH-CH₃; sowie -CO-CCl=CH-COOH, -CO-CH=CCl-COOH, -CO-CBr=CH-COOH, -CO-CH=CBr-COOH, -CO-CCl=CCl-COOH, -CO-CBr=CBr-COOH; Vorstufen des Acryloylrestes und der Derivate des Acryloylrestes wie β-Chlor- oder β-Brompropionyl, 3-Phenylsulfonylpropionyl, 3-Methylsulfonylpropionyl, 2-Chlor-3-phenylsulfonylpropionyl, 2,3-Dichlorpropionyl oder 2,3-Dibrompropionyl; sowie 2-Fluor-2-chlor-3,3-difluorcyclobutan-1-carbonyl, 2,2,3,3-Tetrafluorcyclobutancarbonyl-1- oder sulfonyl-1-, β-(2,2,3,3-Tetrafluorcyclobutyl-1)-acryloyl, α- oder β-Alkenyl- oder Arylsulfonylacryloylgruppen, wie α-oder β-Methylsulfonylacryloyl, Chloracetyl, Bromacetyl, 4-(β-Chlorethylsulfonyl)-butyryl, 4-Vinylsulfonyl-butyryl, 5-(β-Chlorethylsulfonyl)-caproyl, 6-Vinylsulfonylcaproyl; sowie 4-Fluor-3-nitro-benzoyl, 4-Fluor-3-nitrophenylsulfonyl, 4-Fluor-3-methylsulfonylbenzoyl, 4-Fluor-3-cyanbenzoyl, 2-Fluor-5-methylsulfonylbenzoyl, wobei die beispielhaft genannten Reste direkt oder über ein Brückenglied, beispielsweise -NH- oder -NCH₃-, an den Phenyl oder Naphthylrest gebunden sind.

Bevorzugt sind R₁₄ und R₁₅ als faserreaktiver Rest unabhängig voneinander je ein Rest der Formeln (5a), (5b), (5c) oder (5d)

-SO₂Z (5a),

-CONH-(CH₂)₂₋₃-SO₂Z (5b),

-NH-CO-CH(Hal)-CH₂-Hal (5c)

oder

-NH-CO-C(Hal)=CH₂ (5d),

worin Z ein Rest der Formel -CH₂CH₂-U oder -CH=CH₂ und U eine Abgangsgruppe ist, und Hal Halogen, insbesondere Chlor oder Brom, bedeutet,

Geeignete Abgangsgruppen U sind z.B. -Cl, -Br, -F, -OSO₃H, -SSO₃H, -OCO-CH₃, -OPO₃H₂, -OCO-CCl₃, -OCO-CHCl₂, -OCO-CH₂Cl, -OSO₂-C₁-C₄-Alkyl, -OSO₂-N(C₁-C₄-Alkyl)₂ oder - OCO-C₆H₅.

Bevorzugt ist U eine Gruppe der Formel -Cl, -OSO₃H, -SSO₃H, -OCO-CH₃, -OCO-C₆H₅ oder -OPO₃H₂, insbesondere -OSO₃H.

In einer bevorzugten Ausführungsform der vorliegenden Erfindung bedeuten die Reste D₁ und D₂ unabhängig voneinander je einen Rest der Formeln (3) oder (4), worin
R₁₂ und R₁₃ unabhängig voneinander je Wasserstoff, Halogen, C₁-C₄-Alkyl, C₁-C₄-Alkoxy, Carboxy oder Sulfo sind, und
R₁₄ und R₁₅ unabhängig voneinander je einen faserreaktiven Rest der Formeln (5a), (5b), (5c) oder (5d) bedeuten, wobei für Z, Hal und U die oben genannten Bedeutungen und Bevorzugungen gelten.

In einer weiteren bevorzugten Ausführungsform der vorliegenden Erfindung bedeutet D₁ einen Rest der Formeln (3a) oder (4a) 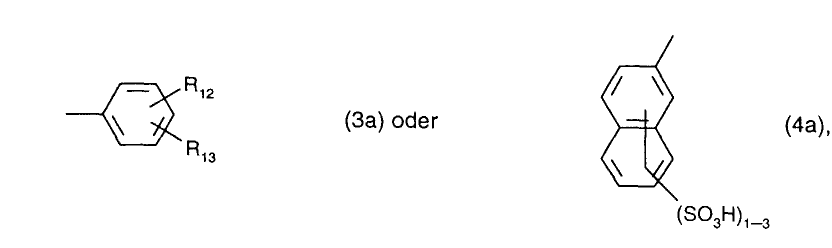 worin
R₁₂ und R₁₃ unabhängig voneinander je Wasserstoff, C₁-C₄-Alkyl, C₁-C₄-Alkoxy, Hydroxy, Carboxy, Carbamido, Ureido, C₂-C₄-Alkanoylamino, gegebenenfalls im Phenylring durch Sulfo substituiertes Benzoylamino oder Sulfo, vorzugsweise Wasserstoff, C₁-C₄-Alkyl, C₁-C₄-Alkoxy, Carboxy, C₂-C₃-Alkanoylamino oder Sulfo, sind, und
D₂ ist ein Rest der Formeln (3b), (3c) 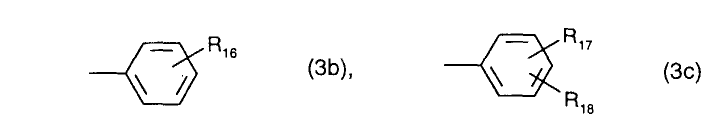 oder (4a), worin
R₁₆ Wasserstoff, C₁-C₄-Alkyl, C₁-C₄-Alkoxy, Hydroxy, Carboxy, Carbamido, Ureido, C₂-C₄-Alkanoylamino oder gegebenenfalls im Phenylring durch Sulfo substituiertes Benzoylamino, vorzugsweise Wasserstoff, C₁-C₄-Alkyl, C₁-C₄-Alkoxy, Carboxy oder C₂-C₃-Alkanoylamino, ist, und
R₁₇ und R₁₈ unabhängig voneinander je C₁-C₄-Alkyl, C₁-C₄-Alkoxy, Hydroxy, Carboxy, Carbamido, Ureido, C₂-C₄-Alkanoylamino, gegebenenfalls im Phenylring durch Sulfo substituiertes Benzoylamino oder Sulfo, vorzugsweise C₁-C₄-Alkyl, C₁-C₄-Alkoxy, Carboxy, C₂-C₃-Alkanoylamino oder Sulfo, sind.

Bevorzugt hat D₁ die Bedeutung von D₂.

In einer besonders bevorzugten Ausführungsform der vorliegenden Erfindung bedeutet der Farbstoff der Formel (1) einen Farbstoff der Formel (6) 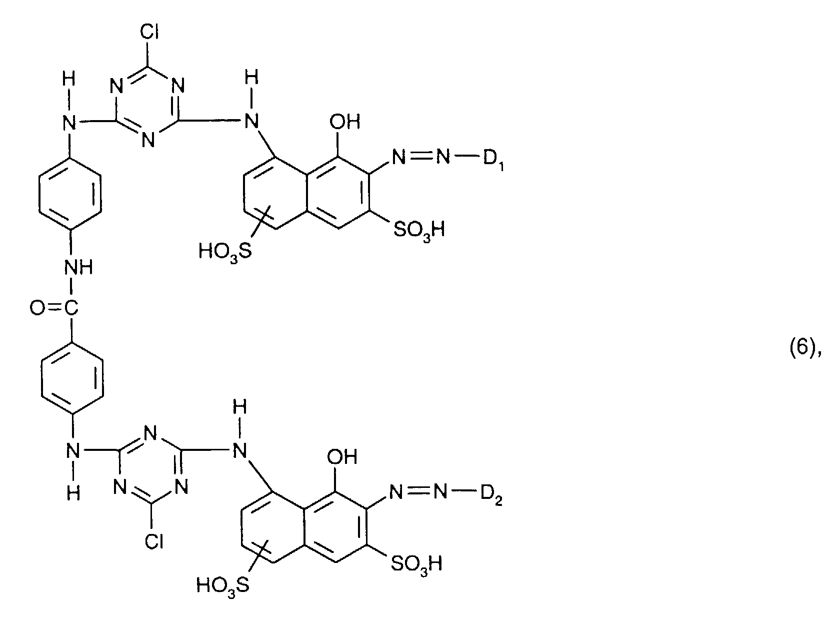 worin
D₁ und D₂ unabhängig voneinander je einen Rest der Formeln (3d) oder (4b) 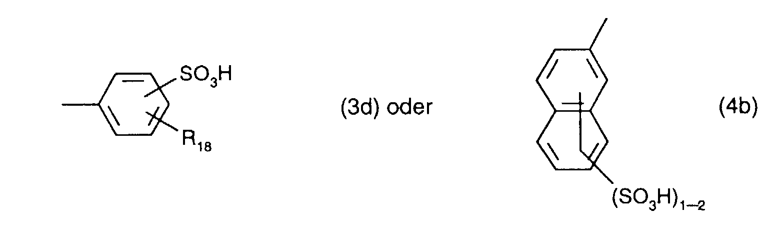 bedeuten,
wobei
R₁₈ C₁-C₄-Alkyl, C₁-C₄-Alkoxy, C₂-C₃-Alkanoylamino oder Sulfo ist.

Vorzugsweise bedeuten D₁ und D₂ in der Verbindung der Formel (1) einen Rest der Formel (3d), worin
R₁₈ Methyl, Methoxy, Acetylamino, Propionylamino oder Sulfo ist.

Ein weiterer Gegenstand der vorliegenden Erfindung ist ein Verfahren zur Herstellung von Azofarbstoffen der Formel (1), dadurch gekennzeichnet, dass man in etwa 1 Moläquivalent je einer Verbindung der Formeln (7a), (7b), (8a) und (8b)

D₁-NH₂ (7a),

D₂-NH₂ (7b)

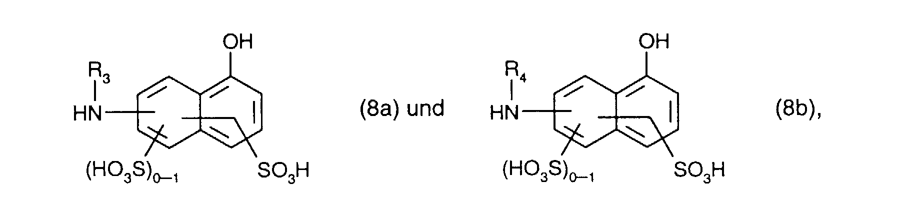

in etwa 2 Moläquivalente einer Verbindung der Formel (9) 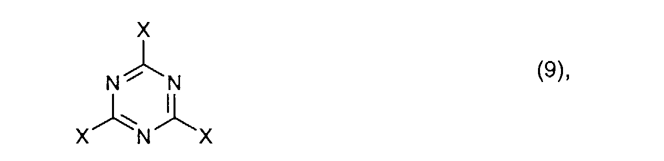 in etwa 1 Moläquivalent einer Verbindung der Formel (10) 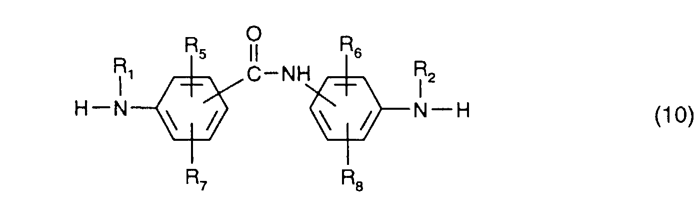 und
gegebenenfalls in etwa 1 Moläquivalent je einer Verbindung der Formeln (11) und (12)

Y₁'-H (11)

und

Y₂'-H (12)

in beliebiger Reihenfolge miteinander umsetzt, wobei die Reste R₁, R₂, R₃, R₄, R₅, R₆, R₇, R₈, D₁ und D₂ unabhängig voneinander die oben unter der Formel (1) angegebenen Bedeutungen haben, X Halogen und Y₁' und Y₂' unabhängig voneinander je die oben für Y₁ und Y₂ unter der Formel (1) genannten Bedeutungen ausser Halogen haben.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Eine Verfahrensvariante "A" besteht beispielsweise darin, dass man (i) eine Verbindung der Formel (7a) diazotiert und mit einer Verbindung der Formel (8a) zur Verbindung der Formel (13a) 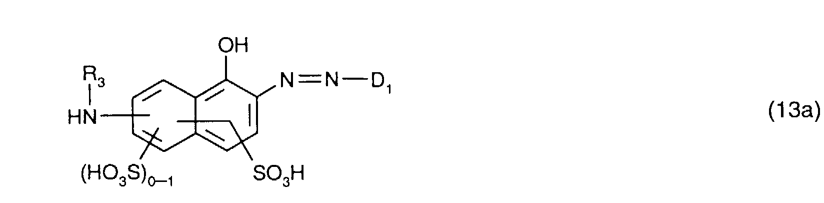 umsetzt
und, unabhängig davon, eine Verbindung der Formel (7b) diazotiert und mit einer Verbindung der Formel (8b) zur Verbindung der Formel (13b) 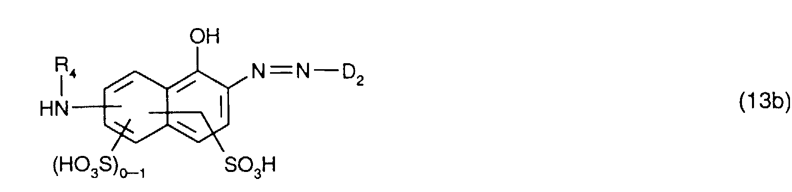 umsetzt,
(ii) eine Verbindung der Formel (13a) mit einer Halogentriazinverbindung der Formel (9) zur Verbindung der Formeln (14a) 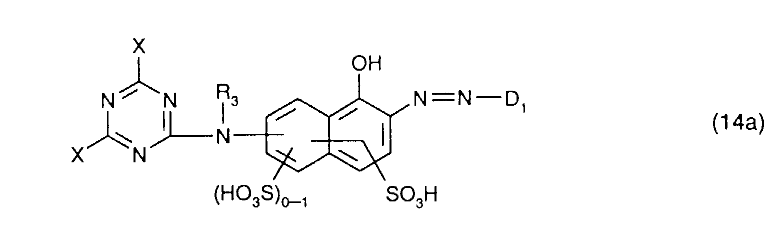 umsetzt und,
unabhängig davon, eine Verbindung der Formel (13b) mit einer Halogentriazinverbindung der Formel (9) zur Verbindung der Formel (14b) 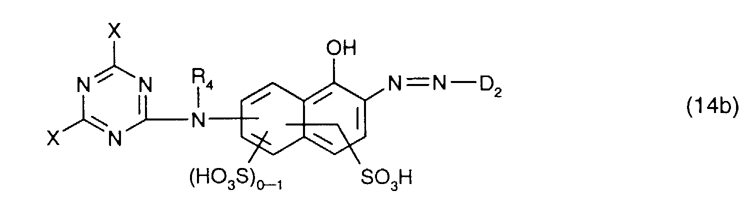 umsetzt und,
(iii) die Verbindungen der Formeln (14a) und (14b) nacheinander, in beliebiger Reihenfolge, mit 1 Moläquivalent einer Verbindung der Formel (10) 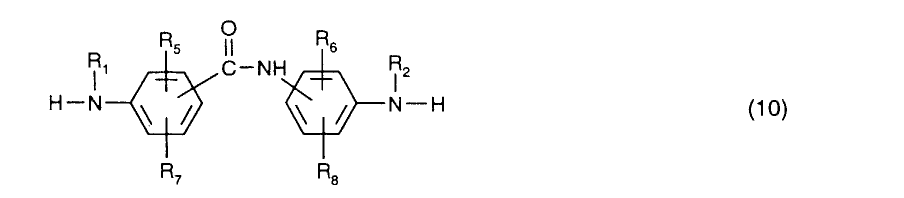 zu einer Verbindung der Formel (15) 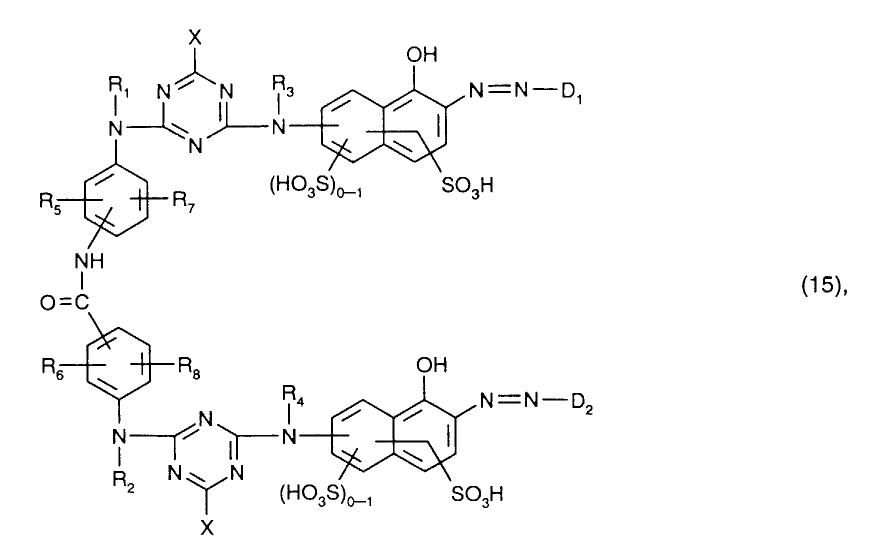 umsetzt, worin die Reste R₁, R₂, R₃, R₄, R₅, R₆, R₇, R₈, D₁ und D₂ unabhängig voneinander die oben unter der Formel (1) angegebenen Bedeutungen haben und X Halogen, vorzugsweise Chlor, bedeutet.

Eine alternative Verfahrensvariante "B" besteht beispielsweise darin, dass man
(i) Verbindungen der Formeln (8a) und (8b), unabhängig voneinander, mit einer Verbindung der Formel (9) zu den Verbindungen der Formeln (16a) und (16b) 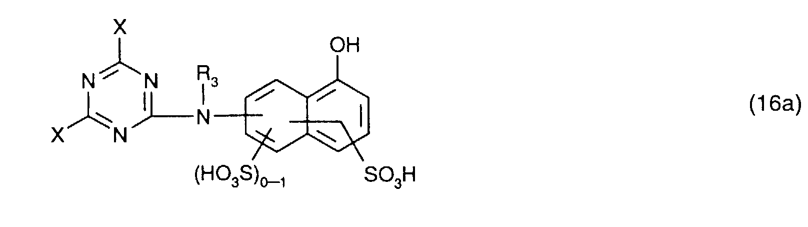 und 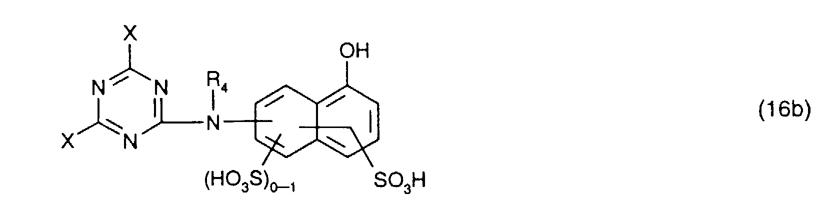 umsetzt,
(ii) eine diazotierte Verbindung der Formel (7a) mit einer Verbindung der Formel (16a) zur Verbindung der Formel (14a) umsetzt und, unabhängig davon, eine diazotierte Verbindung der Formel (7b) mit einer Verbindung der Formel (16b) zur Verbindung der Formel (14b) umsetzt, und
(iii) wie unter A(iii) beschrieben verfährt, indem man die Verbindungen der Formeln (14a) und (14b) nacheinander, in beliebiger Reihenfolge, mit 1 Moläquivalent einer Verbindung der Formel (10) zu einer Verbindung der Formel (15) umsetzt, worin die Reste R₁, R₂, R₃, R₄, R₅, R₆, R₇, R₈, D₁ und D₂ unabhängig voneinander die oben unter der Formel (1) angegebenen Bedeutungen haben und X Halogen, vorzugsweise Chlor, bedeutet.

Eine weitere Verfahrensvariante "C" besteht beispielsweise darin, dass man
(i) wie unter B(i) angegeben verfährt, indem man Verbindungen der Formeln (8a) und (8b), unabhängig voneinander, mit einer Verbindung der Formel (9) zu den Verbindungen der Formeln (16a) und (16b) umsetzt,
(ii) die Verbindungen der Formeln (16a) und (16b) nacheinander, in beliebiger Reihenfolge, mit 1 Moläquivalent einer Verbindung der Formel (10) zu einer Verbindung der Formel (17) 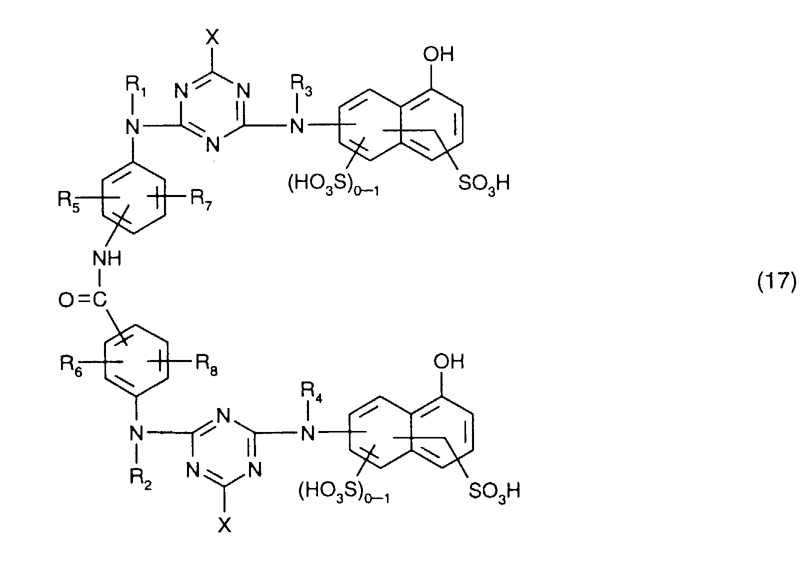 umsetzt, und
(iii) die Verbindung der Formel (17) mit mindestens einer der diazotierten Verbindungen der Formeln (7a) und (7b) zu einer Verbindung der Formel (15) umsetzt, worin
   die Reste R₁, R₂, R₃, R₄, R₅, R₆, R₇, R₈, D₁ und D₂ unabhängig voneinander die oben unter der Formel (1) angegebenen Bedeutungen haben und X Halogen, vorzugsweise Chlor, bedeutet.

Die Verbindungen der Formeln (7a), (7b), (8a), (8b), (9) und (10) sind bekannt oder können in Analogie zu bekannten Verbindungen hergestellt werden.

Die Diazotierung der Verbindungen der Formeln (7a) und (7b) gemäss A(i), B(ii) und C(iii) erfolgt in an sich bekannter Weise, z.B. mit einem Nitrit, z.B. mit einem Alkalimetallnitrit wie Natriumnitrit, in einem mineralsauren Medium, z.B. in einem salzsauren Medium, bei Temperaturen von beispielsweise -5 bis 40°C und vorzugsweise bei -5 bis 10°C.

Die Kupplung auf die Kupplungskomponenten der Formeln (8a) und (8b) gemäss A(i), (16a) und (16b) gemäss B(ii) und (17) gemäss C(iii) erfolgt in an sich bekannter Weise, bei sauren, neutralen bis schwach alkalischen pH-Werten, z.B. einem pH-Wert von 5 bis 10, und Temperaturen von beispielsweise -5 bis 40°C, vorzugsweise 0 bis 30°C.

Als Halogentriazinverbindungen verwendet man vorzugsweise Cyanurhalogenide, wie z.B. Cyanurchlorid oder Cyanurfluorid, insbesondere Cyanurchlorid.

Vorzugsweise setzt man die Trihalogenotriazinverbindung der Formel (9) gemäss den oben beschriebenen Verfahrensschritten A(ii), B(i) und C(i) zunächst mit in etwa stöchiometrischen Mengen jeweils einer der Verbindungen der Formeln (8a), (8b), (13a) oder (13b) bei einer Temperatur von -5 bis 20°C, vorzugsweise 0 bis 10°C um, wobei der pH-Wert durch Zugabe geeigneter Basen, z.B. Alkalimetallbasen wie Lithium-, Natrium- oder Kaliumhydroxid, -carbonat oder -hydrogencarbonat, neutral bis sauer, vorzugsweise bei 2 bis 7, insbesondere 2 bis 5, gehalten wird. Die Reaktion der Verbindung der Formel (10) mit den Verbindungen der Formeln (14a) und (14b) gemäss A(iii) und B(iii) sowie mit den Verbindungen der Formeln (16a) und (16b) gemäss und C(ii) wird vorzugsweise bei leicht erhöhter Temperatur, vorteilhaft z.B. bei 10 bis 50°C, vorzugsweise 30 bis 50°C, und einem neutralen bis leicht sauren pH, der z.B. 5 bis 7 beträgt, durchgeführt, wobei man zweckmässig in etwa stöchiometrische Mengen der Verbindungen der Formeln (14a), (14b), (16a) und (16b) einsetzt. Handelt es sich bei den Verbindungen der Formeln (14a) und (14b) um identische Verbindungen und sind die Verbindungen der Formeln (16a) und (16b) identisch, so stellt man vorteilhaft zunächst 2 Mol-Aequivalente der Verbindung der Formel (14a) her und setzt diese mit ca.1 Mol-Aequivalent Verbindung der Formel (10) gemäss A(iii) und B(iii), wobei die Temperatur vorzugsweise zunächst bei -5 bis 20°C gehalten und dann auf ca. 30 bis 60°C erhöht wird. Ebenso stellt man vorteilhaft zunächst 2 Mol-Aequivalente der Verbindung der Formel (16a) her und setzt diese mit ca.1 Mol-Aequivalent Verbindung der Formel (10) gemäss C(ii) um. wobei man, vorteilhafterweise, wie zuvor beschrieben verfährt. Die gemäss A(iii), B(iii), C(iii) und C(ii) erhältlichen Verbindungen der Formeln (15) und (17) enthalten noch 2 Halogenatome X, die gegebenenfalls in eine Gruppe Y₁ bzw. Y₂ umgewandelt werden können.

Zur Einführung der Reste Y₁ und Y₂ lässt man die Halogenatome X an den Triazinresten der Verbindungen der Formeln (15) und (17) noch mit mindestens einer der Verbindungen der Formeln (11) und (12) reagieren. Die Einführung der Reste Y₁ und Y₂ erfolgt in der Regel im Anschluss an eine Kondensationsreaktion der entsprechenden Cyanurhalogenide bei erhöhter Temperatur, vorzugsweise 70 bis 100°C, und einem neutralen bis leicht alkalischen pH-Wert, der je nach eingesetzter Verbindung der Formel (11) oder (12) z.B. 7 bis 9 beträgt.

Die erfindungsgemässen Azofarbstoffe der Formel (1) liegen entweder in der Form ihrer freien Säure oder vorzugsweise als deren Salze vor. Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die Bedeutung Sulfo umfasst generell die freie Säureform (-SO₃H) als auch die Salzform.

Die erfindungsgemässen Azofarbstoffe der Formel (1) enthalten mindestens zwei Sulfogruppen, insbesondere 2 bis 10 Sulfogruppen und vorzugsweise 4 bis 8 Sulfogruppen.

Bei den Azofarbstoffen der Formel (1) handelt es sich um anionische Säurefarbstoffe. In diesen ist die Zahl der anionischen Gruppen, insbesondere die Zahl der Sulfogruppen, grösser als die Zahl der kationischen Gruppen. Unter kationischen Gruppen sind solche zu verstehen, welche unter den üblichen Färbebedingungen eine kationische Ladung tragen. Als Beispiele seien aliphatisch gebundene Aminoreste genannt. Die im Triazinring vorhandenen sowie die an den Triazinrest gebundenen Stickstoffatome tragen keine kationische Ladung.

Ein weiterer Gegenstand der vorliegenden Erfindung ist die Verwendung von Azofarbstoffen der Formel (1) bzw. der gemäss den zuvor beschriebenen Herstellungsverfahren erhaltenen Azofarbstoffe der Formel (1) zum Färben oder Bedrucken von stickstoffhaltigen oder hydroxygruppenhaltigen Fasermaterialien.

Die erfindungsgemässen Farbstoffe eignen sich also zum Färben oder Bedrucken von stickstoffhaltigen oder hydroxygruppenhaltigen Fasermaterialien. Als Beispiele seien Seide, Leder, Wolle, Polyamidfasern und Polyurethane, und insbesondere cellulosehaltige Fasermaterialien aller Art genannt. Solche cellulosehaltige Fasermaterialien sind beispielsweise die natürlichen Cellulosefasern, wie Baumwolle, Leinen und Hanf, sowie Zellstoff, Papier und regenerierte Cellulose. Die erfindungsgemässen Farbstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern. Besonders geeignet sind die erfindungsgemässen Farbstoffe zum Färben oder Bedrucken von cellulosehaltigen Fasermaterialien. Weiterhin können sie zum Färben oder Bedrucken von natürlichen oder synthetischen Polyamidfasermaterialien verwendet werden.

Die textilen Fasermaterialien können in den verschiedensten Verarbeitungszuständen vorliegen, wie z.B. als Faser, Garn, Gewebe oder Gewirke.

Die erfindungsgemässen Azofarbstoffe der Formel (1) ergeben egale Färbungen und Drucke mit guten Allgemeinechtheiten, insbesondere guten Wasch-, Reib-, Nass-, Nassreib- , Schweiss- und Lichtechtheiten. Die erfindungsgemässen Azofarbstoffe der Formel (1) zeichnen sich ferner durch gleichmässigen Farbaufbau, gutes Aufziehvermögen und hohe Fixiergrade aus. Sofern nötig, kann man die Nassechtheiten, insbesondere die Waschechtheit, der erhaltenen Direktfärbungen und -drucke durch eine Nachbehandlung mit sog. Fixiermitteln noch wesentlich verbessern.

Ebenfalls können textile Fasermaterialien aus Mischfasern, wie z.B. aus Wolle/Baumwoll-, Polyamid/Baumwoll-, Polyacryl/Baumwoll- oder insbesondere Polyester/Baumwoll-Mischfasern durch Einbad-Färbeverfahren und in Gegenwart von Farbstoffen für die jeweils anderen Fasertypen gefärbt werden, insbesondere im Fall der direkffärbenden Azofarbstoffe der Formel (1).

Die erfindungsgemässen Azofarbstoffe der Formel (1), insbesondere die direkffärbenden Azofarbstoffe der Formel (1), sind gut mit anderen Farbstoffen, insbesondere Dispersionsfarbstoffen, kombinierbar. Die direkffärbenden Azofarbstoffe der Formel (1) weisen eine ausreichende Hochtemperatur-Stabilität auf und lassen sich so unter den Färbebedingungen für Polyesterfasern, d.h. bei Temperaturen im Bereich von etwa 100 bis 150°C, vorzugsweise von 110 bis 130°C, aus wässriger Flotte und bei einem pH-Wert von 4 bis 7,5, vorzugsweise 5 bis 7, färben.

Damit ist es möglich, übliche Dispersionsfarbstoffe zusammen mit den direkffärbenden Azofarbstoffen der Formel (1) in einem einstufigen, einbadigen Verfahren zum Färben von Polyester/Baumwoll-Mischfasern (Mischgewebe) einzusetzen, wobei beide Faserarten gleichmässig und echt durch den jeweiligen Farbstoff angefärbt werden. Verwendet man einen Dispersionsfarbstoff mit gleicher Nuance wie die erfindungsgemässen Farbstoffe der Formel (1) sie aufweisen, so ist es auch möglich Ton-in-Ton-Färbungen zu erhalten.

Mit der Bereitstellung der erfindungsgemässen Azofarbstoffe der Formel (1), insbesondere den direkffärbenden Azofarbstoffen der Formel (1), kann man das Färben von textilen Mischfasern (Mischgeweben), z.B. solchen aus Polyester- und Cellulosefasern, wesentlich vereinfachen. Die an sich übliche Färbung jeder Faserart einer Fasermischung in einem separaten Arbeitsgang unter Anwendung unterschiedlicher Färbebedingungen ist damit nicht mehr nötig.

Die erfindungsgemässen Azofarbstoffe der Formel (1) eignen sich auch zur Herstellung von wässrigen Tinten für den Tintenstrahldruck (ink-jet printing).

Die folgenden Beispiele dienen zur Erläuterung der Erfindung. Teile und Prozente beziehen sich auf das Gewicht, sofern nicht anders angegeben. Gewichtsteile und Volumenteile stehen in gleicher Beziehung zueinander wie Kilogramm und Liter. Die Temperaturen sind in Celsiusgraden angegeben.

Beispiel 1: 36,6 Teile 4-Propionylamido-orthanilsäure aufgeschlämmt in 250 Teilen Wasser werden mit 30%iger Natriumhydroxidlösung auf pH 7 gestellt und mit 44,95 Teilen einer 4-normalen Natriumnitritlösung und 43,1 Teilen 32%iger Salzsäure in 100 Teilen eines Eis/Wasser Gemisches bei 0 bis 5°C diazotiert. Der Nitritüberschuss wird anschliessend mit Sulfaminsäure zerstört und der pH-Wert mit Natriumcarbonat auf 7 gestellt. Die so hergestellte Lösung der Diazoverbindung wird bei 5 bis 10°C zu einer Lösung aus 48,0 Teilen 1-Amino-8-naphthol-3,6-disulfonsäure und 26,45 Teilen einer 30%igen Natriumhydroxydlösung in 380 Teilen eines Eis/Wasser-Gemisches gegeben, wobei der pH-Wert während der Kupplungsreaktion durch weitere Zugabe einer 30%igen Natriumhydroxydösung bei ca. 8 gehalten wird. Man lässt 1 Stunde bei 5-10°C nachrühren, stellt den pH-Wert mit Salzsäure auf 6,5 und fällt den Azofarbstoff durch Zugabe von Kochsalz aus. Der erhaltene Farbstoff, welcher der in Form der freien Säure angegebenen Verbindung der Formel (101) 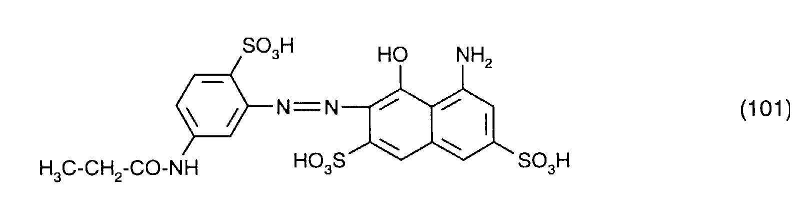 entspricht,
wird abfiltriert, mit einer Kochsalzlösung gewaschen und getrocknet.

Beispiel 2: Verfährt man wie in Beispiel 1 angegeben, verwendet jedoch anstelle von 36,6 Teilen 4-Propionylamido-orthanilsäure 34,5 Teile 4-Acetamido-orthanilsäure, so wird ein Azofarbstoff erhalten, welcher in Form der freien Säure der Formel (102) 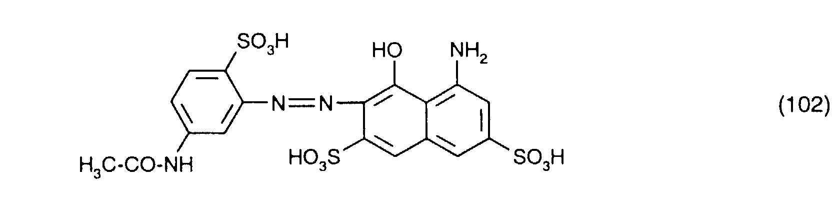 entspricht.

4-Propionylamido-orthanilsäure und 4-Acetamido-orthanilsäure werden nach an sich bekannten Verfahren aus 1,3-Phenylendiamin-3-sulfonsäure hergestellt.

Beispiel 3: 18,5 Teile Cyanurchlorid werden mit 100 Teilen Eiswasser und 100 Teilen Eis verrührt. Die erhaltene Cyanurchloridsuspension wird vorgelegt und es wird bei einer Temperatur von 8 bis 10°C und einem pH-Wert von 5 eine Lösung von 57,4 Teilen der Verbindung der Formel (101) gemäss Beispiel 1 in 1150 Teilen Wasser zugetropft. Der pH wird durch Zugabe einer 2-normalen wässrigen Kaliumhydrogencarbonatlösung bei einem Wert von 5 gehalten. Nach Beendigung des Eintropfens lässt man die erhaltene Mischung ca. 2,5 Stunden ausreagieren. Der Verbrauch an 2-normaler wässriger Kaliumhydrogencarbonatlösung beträgt ca. 100 Teile. Es wird eine Reaktionslösung erhalten, welche die in Form der freien Säure angegebene Verbindung der Formel (103) 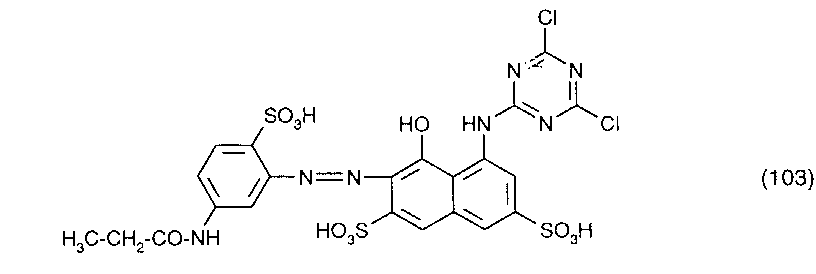 enthält.

In einer zweiten Stufe werden 17,0 Teile 4,4'-Diaminobenzanilid in 100 Teilen 2-normaler Salzsäure gelöst und zur wie oben angegeben erhaltenen Lösung der Verbindung der Formel (103) bei 35°C zugetropft, wobei der pH durch Zugabe einer 2-normalen wässrigen Kaliumhydrogencarbonatlösung bei einem Wert von 5 bis 6,5 gehalten wird. Nach Beendigung des Zutropfens heizt man die Reaktionsmischung auf 60 bis 70°C auf und lässt anschliessend über Nacht bei Raumtemperatur ausreagieren. Der Verbrauch an 2-normaler wässriger Kaliumhydrogencarbonatlösung beträgt ca. 200 Teile. Anschliessend wird mit Natriumchlorid ausgesalzen und das ausgefallene Produkt abgenutscht. Nach Trocknen im Vakuumschrank erhält man 83,1 Teile einer Verbindung (Rohprodukt), die in Form der freien Säure der Formel (104) 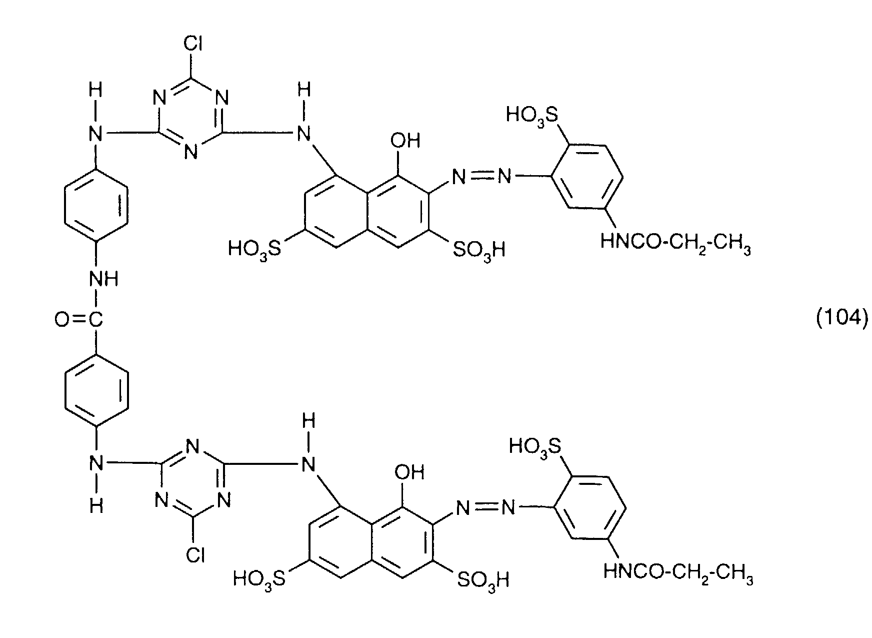 entspricht
und Baumwolle in rosa Farbtönen färbt.

Beispiel 4: 30,1 Teile der Verbindung der Formel (104) werden in 500 Teilen Wasser gelöst, mit 2,75 Teilen 2-Aminoäthanol versetzt und auf eine Temperatur von 85°C erhitzt. Der pH fällt von anfänglich 11,2 auf einen Wert von 8,5. Die Reaktionsdauer beträgt ca. 20 Stunden. Zur Abscheidung des Reaktionsproduktes wird mit Natriumchlorid ausgesalzen und das ausgefallene Produkt abfiltriert. Nach Trocknen erhält man 28,5 Teile eines Farbstoffes, der in Form der freien Säure der Verbindung der Formel (105) 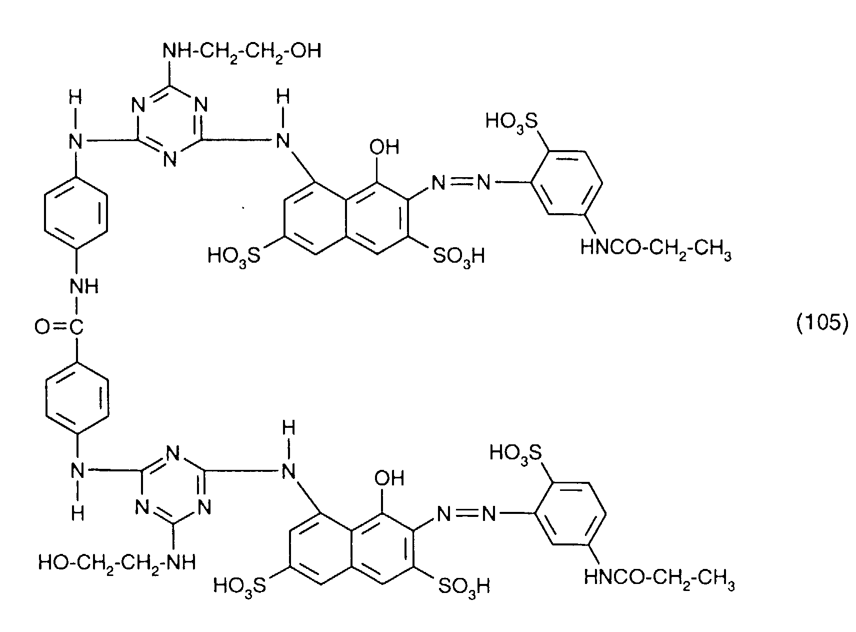 entspricht
und Baumwolle in rosa Farbtönen färbt.

Beispiele 5 bis 27: Verfährt man wie in Beispiel 3 und gegebenfalls Beispiel 4 angegeben, verwendet jedoch anstelle von 57,4 Teilen der Verbindung der Formel (101) eine äquimolare Menge einer Verbindung der Formel (106) 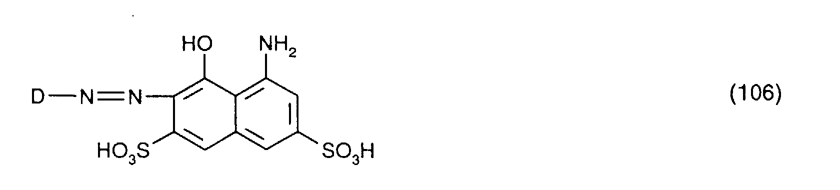 und gegebenenfalls 2,75 Teile 2-Aminoäthanol oder anstelle von 2,75 Teilen 2-Aminoäthanol eine äquimolare Menge einer Verbindung der Formel (107)

H-Y' (107),

wobei D und H-Y' die in der folgenden Tabelle 1 angegebenen Bedeutungen haben, so werden die in Tabelle 1 angegebenen Farbstoffe der allgemeinen Formel (108) 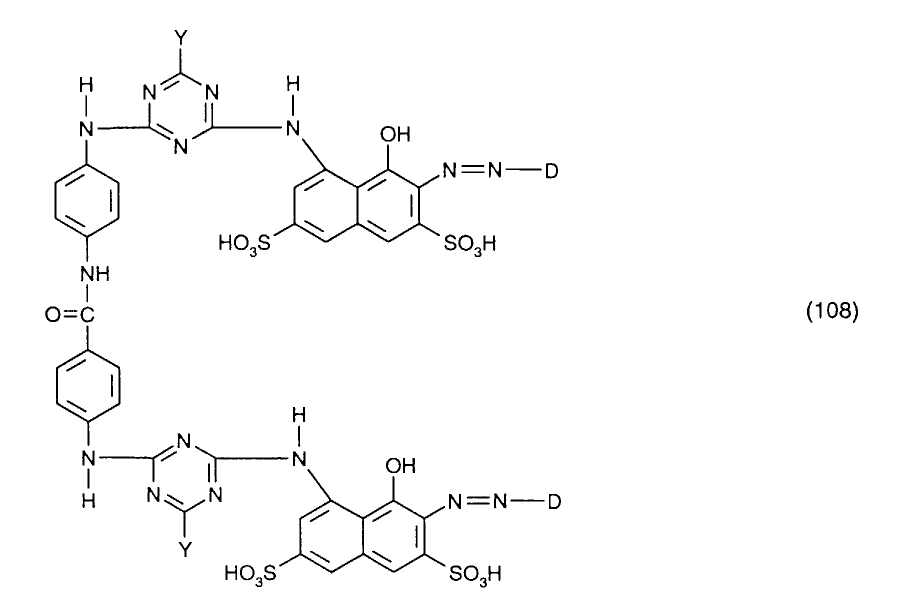 erhalten, worin D und Y die in Tabelle 1 angegebenen Bedeutungen haben, und welche Baumwolle in rosa Farbtönen färben.

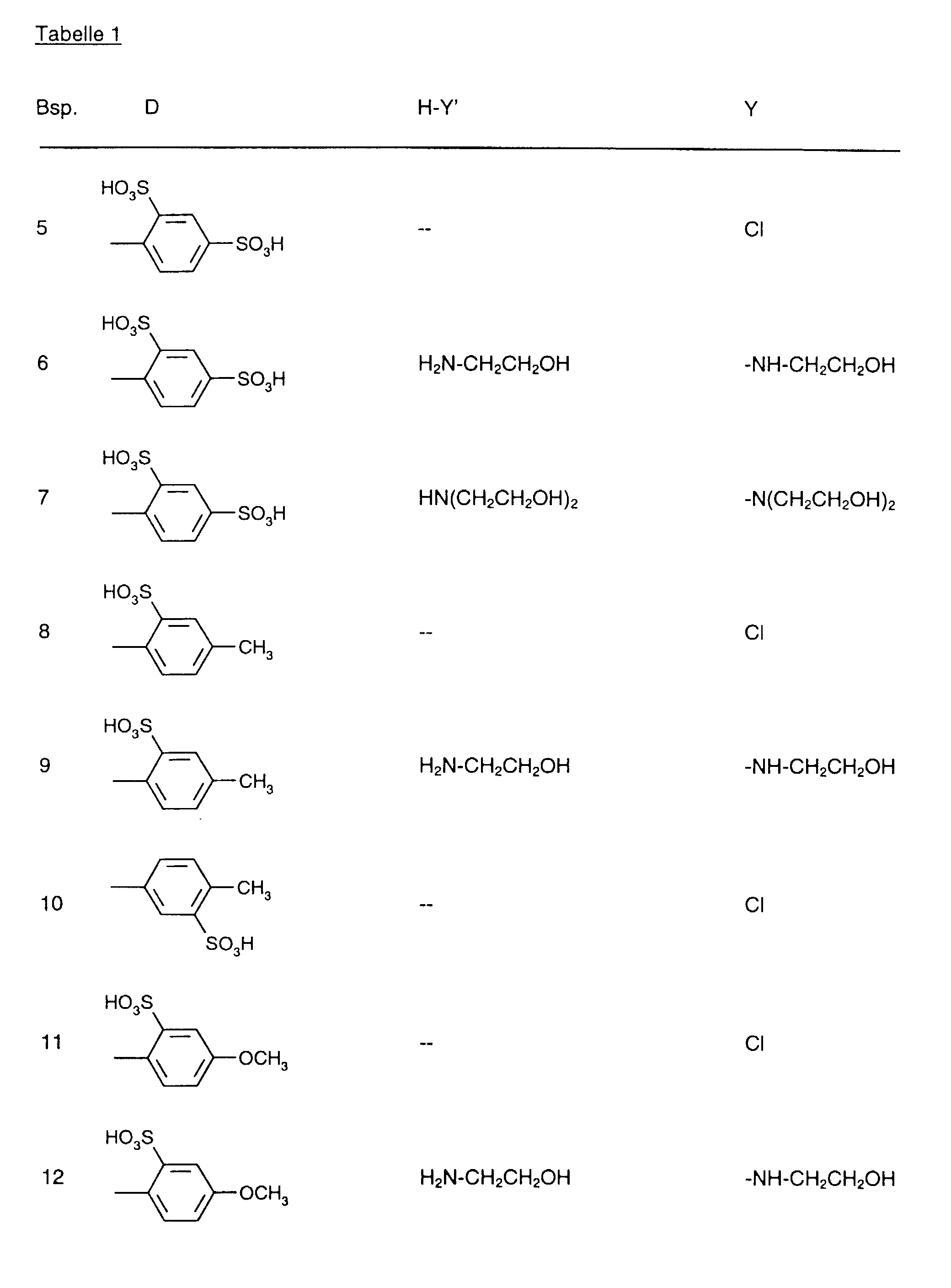

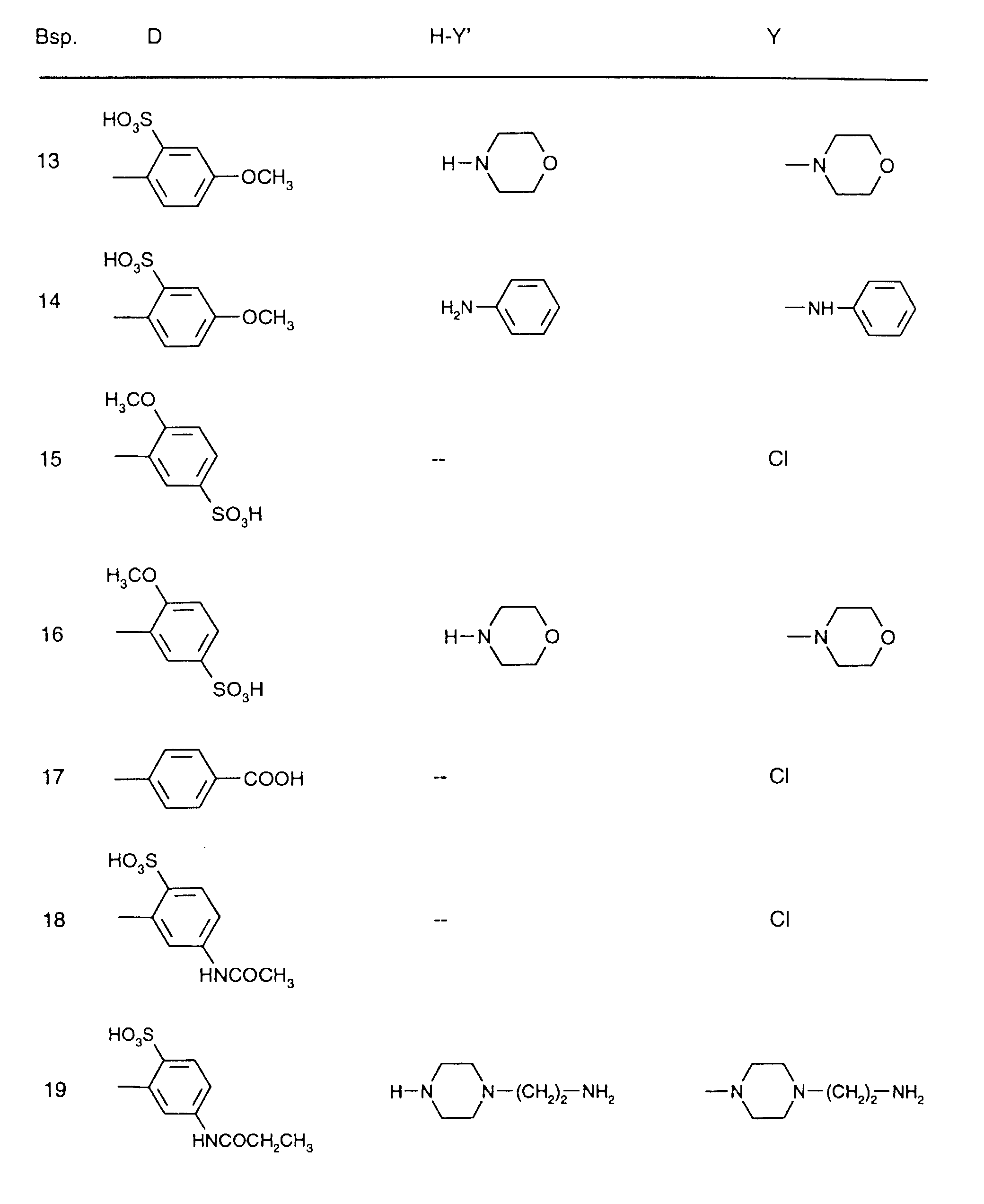

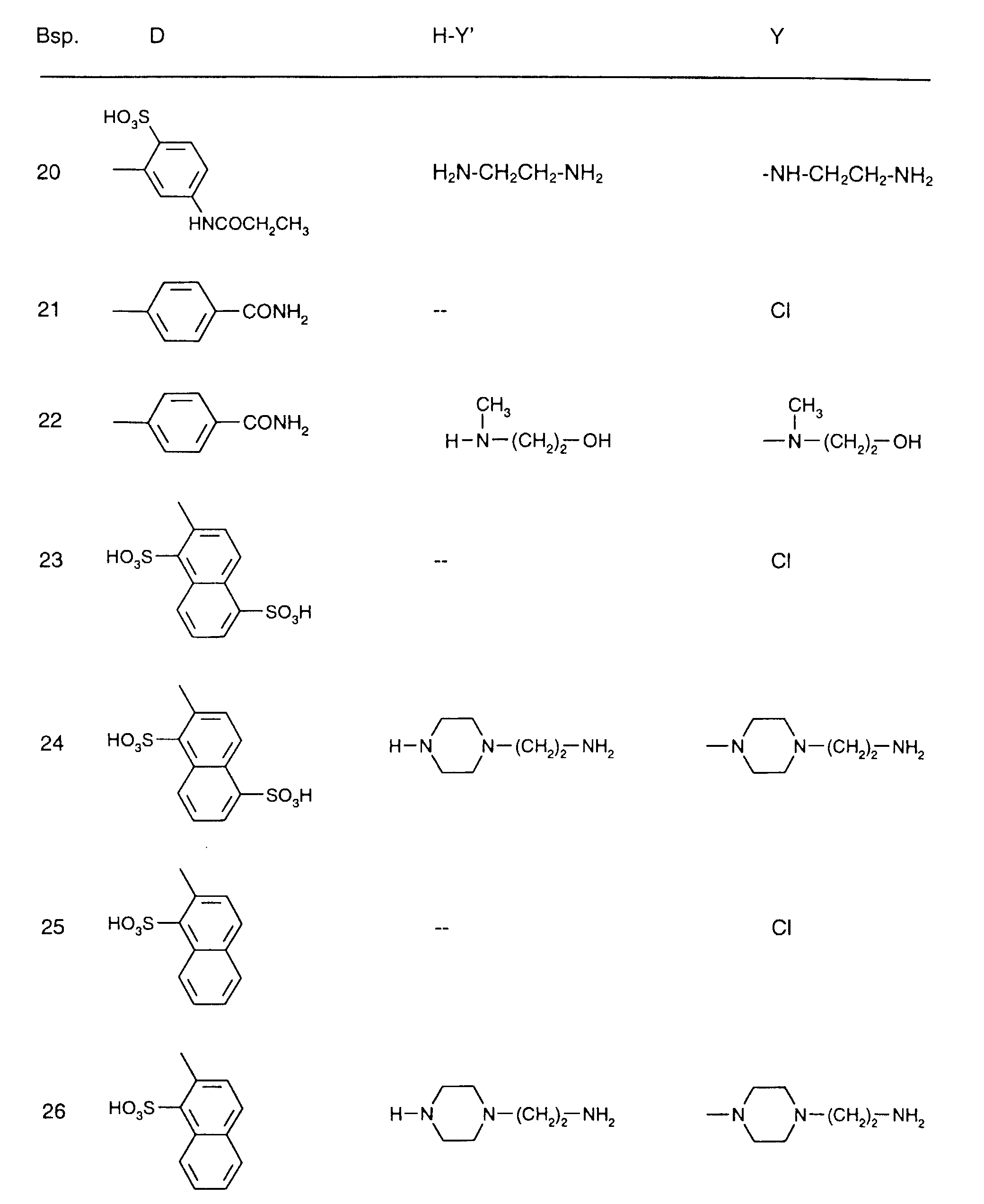

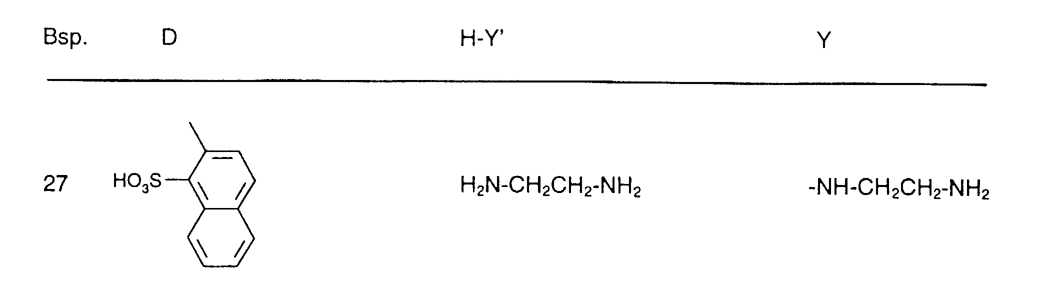

Die Verbindungen der Formel (106) sind bekannt, soweit deren Herstellung nicht bereits in den Beispielen 1 und 2 beschrieben ist, oder können in Analogie zu bekannten Verbindungen bzw. in Analogie zu den Beispielen 1 und 2 hergestellt werden.

Beispiel 28: 18,5 Teile Cyanurchlorid werden mit 100 Teilen Eiswasser und 100 Teilen Eis verrührt. Die erhaltene Cyanurchloridsuspension wird vorgelegt und es wird bei einer Temperatur von 0 bis 2°C und einem pH-Wert von 2 eine Lösung von 31,9 Teilen 1-Amino-8-naphthol-3,6-disulfonsäure in 200 Teilen einer wässrigen Natriumhydroxidlösung (pH 6) zugetropft. Der pH wird durch Zugabe einer 2-normalen wässrigen Natriumhydroxidlösung bei einem Wert von 2 gehalten. Nach Beendigung des Eintropfens lässt man die erhaltene Mischung ca. 2,5 Stunden ausreagieren. Der Verbrauch an 2-normaler wässriger Natriumhydroxidlösung beträgt ca. 52 Teile. Es wird eine Reaktionslösung erhalten, welche die in Form der freien Säure angegebene Verbindung der Formel (109) 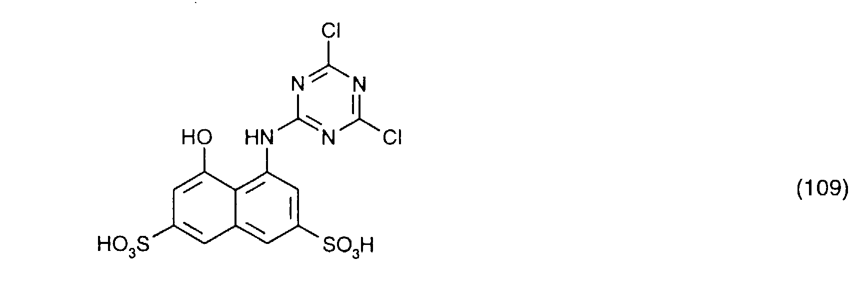 enthält.

In einer zweiten Stufe werden 11,4 Teile 4,4'-Diaminobenzanilid in 150 Teilen verdünnter Salzsäure gelöst und zur wie oben angegeben er haltenen Lösung der Verbindung der Formel (109) bei 10°C zugetropft, wobei der pH durch Zugabe einer 2-normalen wässrigen Natriumhydroxidlösung bei einem Wert von 2 bis 2,5 gehalten wird. Nach Beendigung des Zutropfens stellt man die Reaktionsmischung auf einen pH-Wert von 5, lässt über Nacht bei Raumtemperatur ausreagieren. Im Anschluss erhitzt man auf 70°C und stellt den pH-Wert auf 7,8. Der Verbrauch an 2-normaler wässriger Natriumhydroxidlösung beträgt ca. 100 Teile. Nach 5 Minuten wird der pH mit wässriger Salzsäure auf 6,5 gestellt und die Reaktionsmischung auf 18°C abgekühlt. Das ausgefallene Produkt wird abgenutscht. Nach Trocknen im Vakuumschrank erhält man 59 Teile einer Verbindung, die in Form der freien Säure der Formel (110) 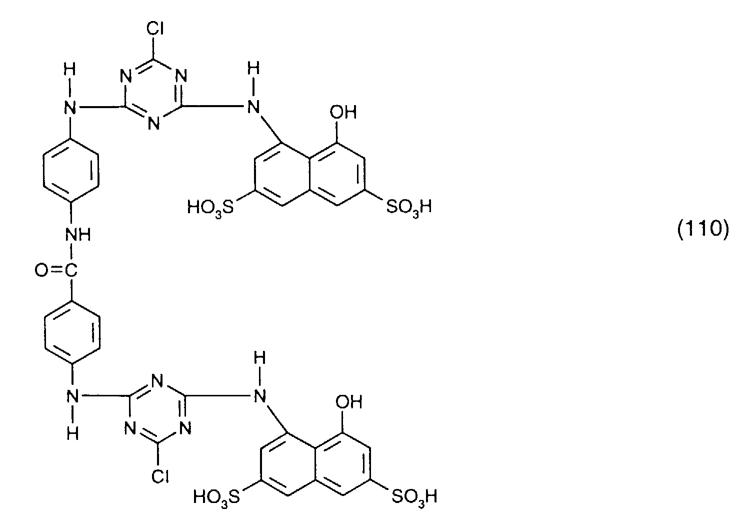 entspricht.

36,1 Teile 2-Amino-5-(β-Sulfatoaethylsulfonyl)-benzolsulfonsäure werden in 100 Teilen Wasser/Eis-Gemisch und 26 Teilen konzentrierter Salzsäure verrührt. Anschliessend wird innerhalb von 30 Minuten bei einer Temperatur von ca. 0°C eine Lösung von 7,04 Teilen Natriumnitrit in 25 Teilen Wasser zugetropft. Nach der Diazotierung wird der Nitritüberschuss mit Sulfaminsäure zerstört. Zur Kupplung werden 54,6 Teile einer Verbindung der Formel (110) in 400 Teilen Wasser gelöst und mit ca. 14,5 Teilen einer wässrigen 30%igen Natriumhydroxidlösung versetzt. Zu dieser Lösung wird die wie oben angegeben erhältliche Suspension der Diazoverbindung getropft und der pH wird durch Zugabe einer wässrigen Natriumhydroxidlösung bei einem Wert von 4,8 gehalten. Nachdem die Kupplung beendet ist, wird mit Natriumchlorid ausgesalzen und abfiltriert. Nach Trocknen erhält man 90 Teile einer Verbindung, welche in Form der freien Säure der Formel (111) 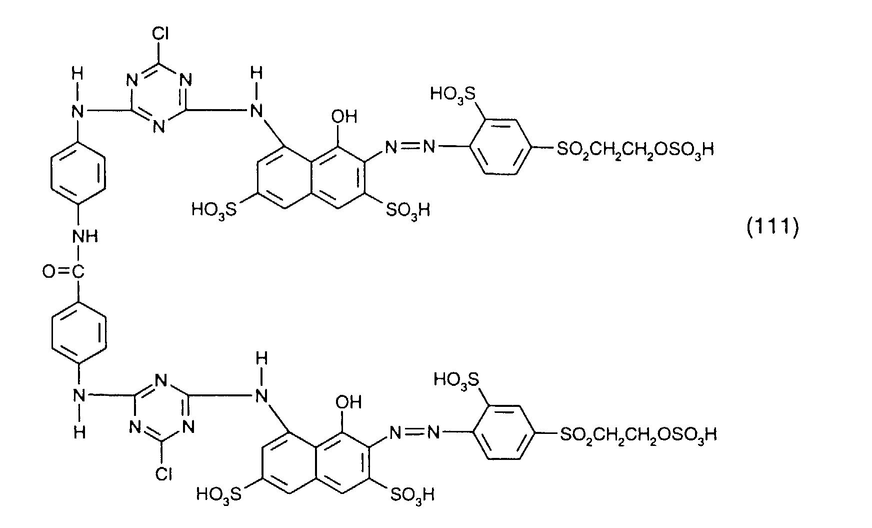 entspricht und welche Baumwolle in rosa Farbtönen färbt.

Beispiel 29: Verfährt man wie in Beispiel 28 angegeben, verwendet jedoch anstelle von 36,1 Teilen 2-Amino-5-(β-Sulfatoaethylsulfonyl)-benzolsulfonsäure eine äquimolare Menge 2-Amino-4-(2,3-dibrompropionylamido)-benzolsulfonsäure so wird eine Verbindung erhalten, welche in Form der freien Säure der Formel (112) 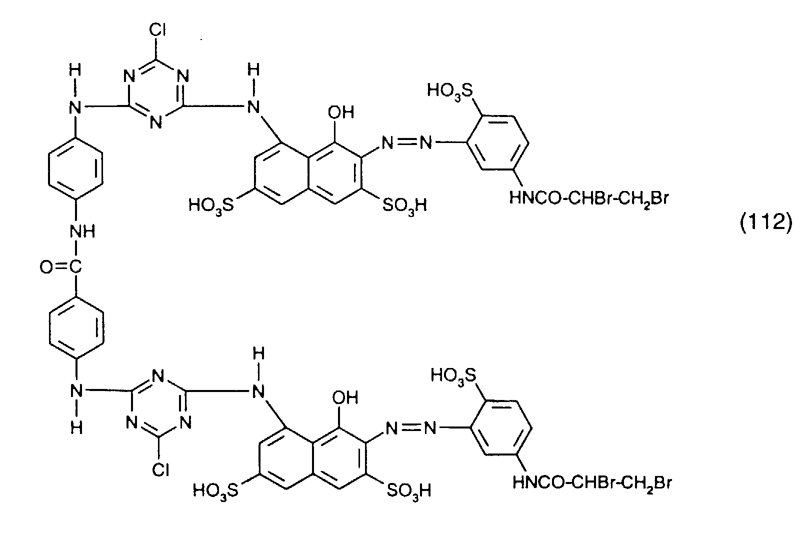 save entspricht
und welche Baumwolle in rosa Farbtönen färbt.

Beispiel 30: Verfährt man wie in Beispiel 28 angegeben, verwendet jedoch anstelle von 36,1 Teilen 2-Amino-5-(β-Sulfatoaethylsulfonyl)-benzolsulfonsäure eine äquimolare Menge 2-Amino-6-(β-Sulfatoaethylsulfonyl)-naphthalinsulfonsäure so wird eine Verbindung erhalten, welche in Form der freien Säure der Formel (113) 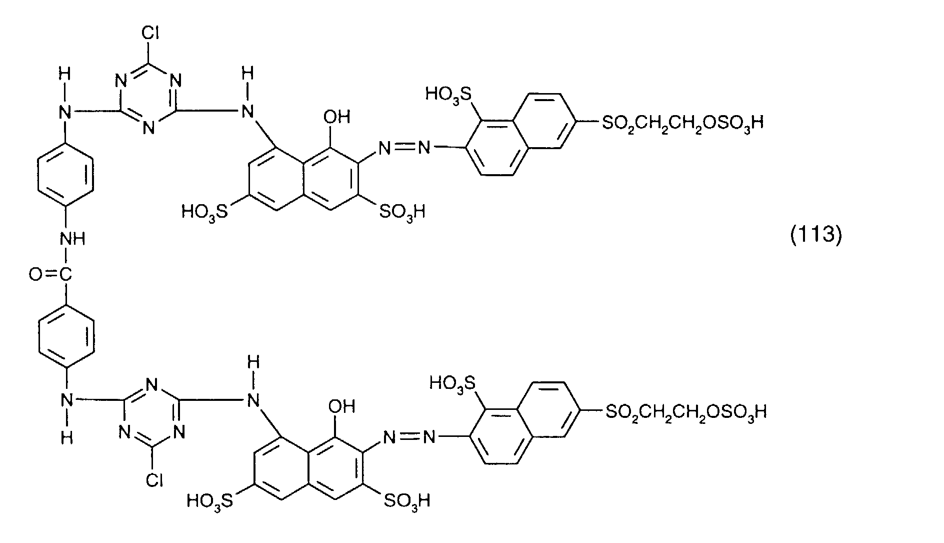 entspricht und welche Baumwolle in rosa Farbtönen färbt.

Beispiel 31: Verfährt man wie in Beispiel 28 angegeben, verwendet jedoch anstelle von 36,1 Teilen 2-Amino-5-(β-Sulfatoaethylsulfonyl)-benzolsulfonsäure eine äquimolare Menge der Verbindung der Formel 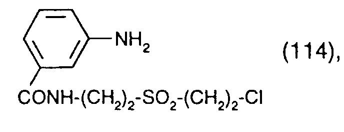 so wird eine Verbindung erhalten, welche in Form der freien Säure der Formel (115) 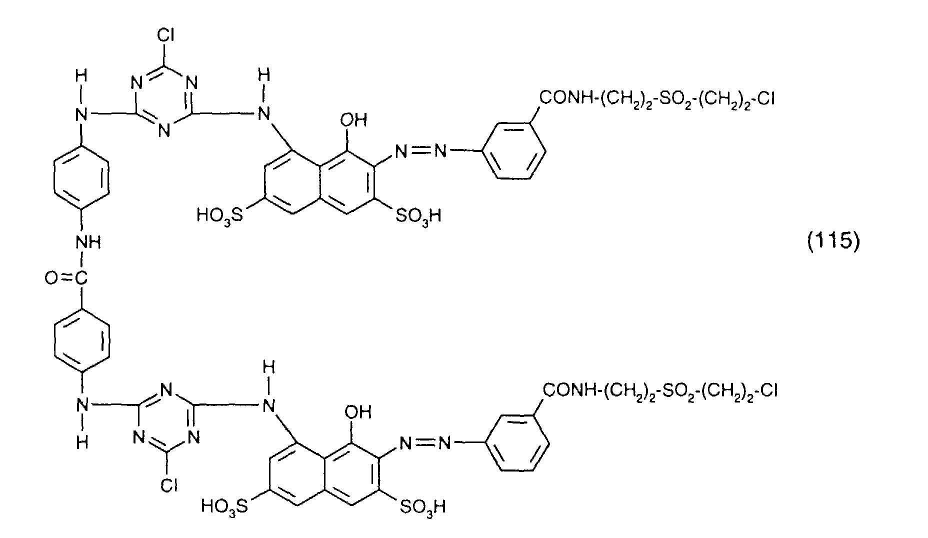 entspricht und welche Baumwolle in rosa Farbtönen färbt.

Die in den Beispielen 28 bis 30 verwendeten Diazokomponenten und die Verbindung der Formel (114) sind bekannt oder können in Analogie zu bekannten Verbindungen hergestellt werden.

### Färbevorschrift 1:

10 Teile Baumwollgewebe (gebleicht und mercerisiert) werden bei ca. 30°C in ein Färbebad eingebracht, welches 200 Teile Wasser und 0,35 Teile Farbstoff gemäss Beispiel 3 enthält. Die Flotte wird innerhalb von 30 Minuten auf 95°C erhitzt und 15 Minuten bei dieser Temperatur belassen. Dann werden 4 Teile Natriumsulfat zugesetzt und noch weitere 45 Minuten bei 95°C gefärbt. Danach wird das Färbebad innerhalb von 15 Minuten auf 80°C abgekühlt und noch 15 Minuten bei dieser Temperatur belassen. Die Färbung wird dann gründlich mit kaltem Wasser gespült und getrocknet.

### Färbevorschrift 2:

10 Teile einer Fasermischung aus Polyester und Baumwolle werden bei ca. 50°C in ein Färbebad eingebracht, welches 200 Teile Wasser, ein Farbstoffgemisch bestehend aus 0,35 Teilen C.I. Disperse Red 60 und 0,35 Teilen des Farbstoffes gemäss Beispiel 4, 0,4 Teile Ammoniumsulfat sowie 0,2 Teile eines anionischen Dispersionsmittels (z.B. Formaldehyd-Kondensationsprodukt von Naphthalinsulfonsäure) enthält. Das Färbebad wird mit Ameisensäure auf einen pH-Wert von 5,5 eingestellt, 1 Teil Natriumsulfat zugesetzt und dann innerhalb von 45 Minuten auf ca. 130°C aufgeheizt. Man färbt weitere 45 Minuten bei 130°C, kühlt dann das Färbebad innerhalb von 30 Minuten auf ca. 80°C ab und belässt es weitere 45 Minuten bei dieser Temperatur. Die Färbung wird dann gründlich mit kaltem Wasser gespült und getrocknet.

### Färbevorschrift 3.

Man verfährt wie in den Färbevorschriften 1 oder 2 beschrieben, gibt jedoch nach Abschluss des Färbevorgangs die kalt gespülte Färbung in ein frisches ca. 30°C warmes Bad, welches 200 Teile Wasser und 0,2-0,6 Teile eines kationischen Nachbehandlungsmittels (Amin-Formaldehyd-Dicyandiamid-Kondensationsprodukt oder Zubereitung auf der Basis von Dicyandiamid und Diäthylentriamin) enthält. Die Färbung wird 30 Minuten bei 30°C nachbehandelt und anschliessend ohne weiteren Spülprozess getrocknet; man erhält eine Färbung mit verbesserten Nassechtheiten.

### Färbevorschrift 4

Man verfährt wie in den Färbevorschriften 1 oder 2 beschrieben, gibt jedoch nach Abschluss des Färbevorgangs die kalt gespülte Färbung in ein frisches ca. 25°C warmes Bad, welches 200 Teile Wasser, 1 Teil Natriumsulfat und 0,6 Teile eines faserreaktiven kationischen Nachbehandlungsmittels auf Basis von N-Methyldialkylamin und Epichlorhydrin enthält. Die Temperatur wird innerhalb von 15 Minuten auf 40°C erhöht, 0,8 Teile 30%ige Natriumhydroxidlösung zugegeben und die Färbung weitere 45 Minuten bei 40°C behandelt. Die Färbung wird schliesslich heiss gespült und getrocknet; sie weist verbesserte Nassechtheiten auf.

### Färbevorschrift 5

2 Teile des gemäss Beispiel 28 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

### Druckvorschrift

3 Teile des gemäss Beispiel 28 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzol-sulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Azofarbstoffe der Formel (1) 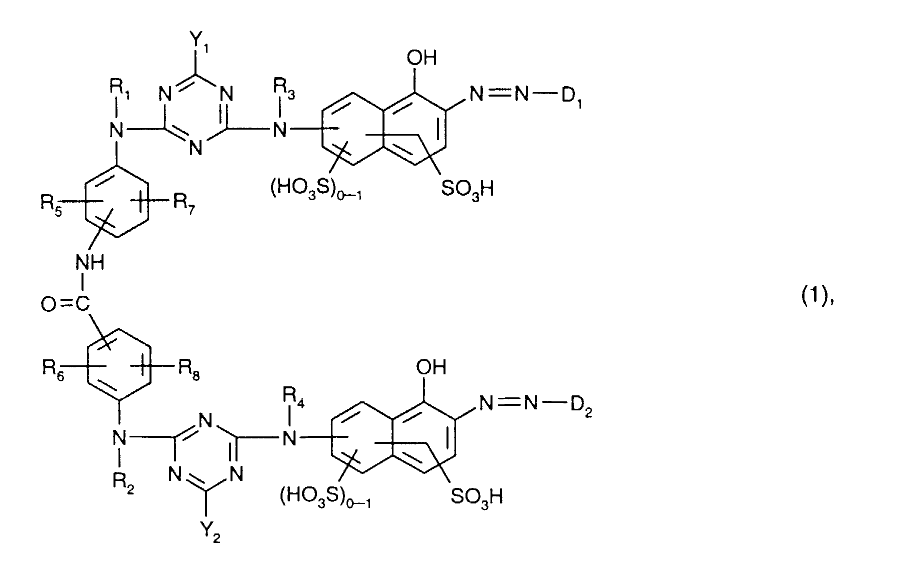 dadurch gekennzeichnet, dass
R₁, R₂, R₃ und R₄ unabhängig voneinander je Wasserstoff oder gegebenenfalls substituiertes C₁-C₄-Alkyl sind,
R₅, R₆, R₇ und R₈ unabhängig voneinander je Wasserstoff, C₁-C₄-Alkyl, C₁-C₄-Alkoxy, Halogen oder Sulfo bedeuten,
D₁ und D₂ unabhängig voneinander je einen Rest der Benzol- oder Naphthalinreihe bedeuten, und
Y₁ und Y₂ unabhängig voneinander je Halogen, gegebenenfalls substituiertes Amino, Morpholino, Piperidin-1-yl oder gegebenenfalls am Stickstoff substituiertes Piperazin-1-yl sind,
mit der Massgabe, dass D₁ und D₂ nicht gleichzeitig Sulfophenyl bedeuten, falls Y₁ und Y₂ Chlor und R₅, R₆, R₇ und R₈ Wasserstoff sind.

2. Azofarbstoffe gemäss Anspruch 1, dadurch gekennzeichnet, dass
R₁, R₂, R₃ und R₄ unabhängig voneinander je Wasserstoff oder C₁-C₄-Alkyl, insbesondere Wasserstoff, bedeuten.

3. Azofarbstoffe gemäss einem der Ansprüche 1 und 2, dadurch gekennzeichnet, dass
R₅ und R₆ unabhängig voneinander je Wasserstoff oder Sulfo, insbesondere Wasserstoff, und
R₇ und R₈ Wasserstoff bedeuten.

4. Azofarbstoffe gemäss einem der Ansprüche 1 bis 3, dadurch gekennzeichnet, dass Y₁ und Y₂ unabhängig voneinander je Halogen, Phenylamino, gegebenenfalls im Alkylteil durch Hydroxy substituiertes N-Mono- oder N,N-Di-C₁-C₄-Alkylamino, Morpholino oder je einen Rest der Formeln (2a'), (2c'), (2d') oder (2e')
―NH―E―NH₂ (2a') 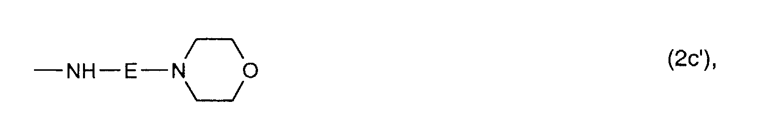 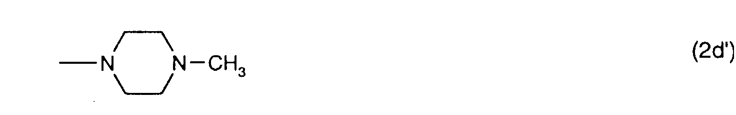
oder 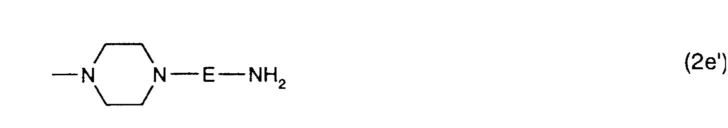 bedeuten,
worin
E C₂-C₄-Alkylen ist.

5. Azofarbstoffe gemäss einem der Ansprüche 1 bis 4, dadurch gekennzeichnet, dass Y₁ und Y₂ unabhängig voneinander je Halogen, Phenylamino, N-β-Hydroxyaethylamino, N,N,-Di-β-Hydroxyaethylamino, Morpholino oder je einen Rest der Formeln (2a") oder (2e")
―NH―(CH₂)_{2―3}―NH₂ (2aʺ)
oder 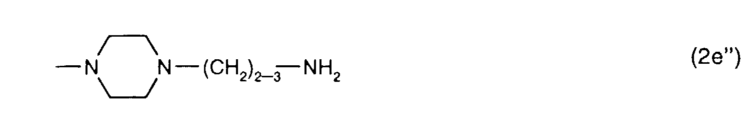 bedeuten.

6. Azofarbstoffe gemäss einem der Ansprüche 1 bis 5, dadurch gekennzeichnet, dass Y₁ und Y₂ unabhängig voneinander Halogen, insbesondere Chlor, sind

7. Azofarbstoffe gemäss einem der Ansprüche 1 bis 6, dadurch gekennzeichnet, dass D₁ und D₂ unabhängig voneinander je einen Rest der Formeln (3) oder (4) 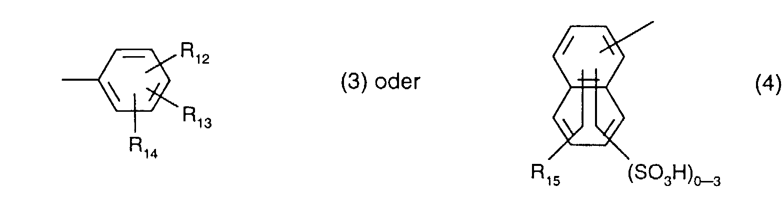 bedeuten,
worin
R₁₂ und R₁₃ unabhängig voneinander je Wasserstoff, Halogen, C₁-C₄-Alkyl, C₁-C₄-Alkoxy, Hydroxy, Carboxy, Carbamoyl, Carbamido, Ureido, Amino, N-Mono- oder N,N-Di-C₁-C₄-Alkylamino, gegebenenfalls im Phenylring durch Nitro, C₁-C₄-Alkyl, C₁-C₄-Alkoxy oder Sulfo substituiertes Phenylamino oder N-C₁-C₄-Alkyl-N-phenylamino, gegebenfalls im Alkylteil durch C₁-C₄-Alkoxy oder Hydroxy substituiertes C₂-C₄-Alkanoylamino, gegebenenfalls im Phenylring durch C₁-C₄-Alkyl, C₁-C₄-Alkoxy, Sulfo oder Halogen substituiertes Benzoylamino oder Sulfo sind,
R₁₄ Wasserstoff, C₁-C₄-Alkyl, C₁-C₄-Alkoxy, Hydroxy oder einen faserreaktiven Rest bedeutet, und
R₁₅ Wasserstoff, gegebenenfalls im Phenylring durch Nitro, C₁-C₄-Alkyl, C₁-C₄-Alkoxy oder Sulfo substituiertes Phenylamino oder N-C₁-C₄-Alkyl-N-phenylamino, Hydroxy, Nitro oder einen faserreaktiven Rest bedeutet.

8. Azofarbstoffe gemäss Anspruch 7, dadurch gekennzeichnet, dass
R₁₂ und R₁₃ unabhängig voneinander je Wasserstoff, Halogen, C₁-C₄-Alkyl, C₁-C₄-Alkoxy, Hydroxy, Carboxy, Carbamoyl, Carbamido, Ureido, gegebenfalls im Alkylteil durch C₁-C₄-Alkoxy oder Hydroxy substituiertes C₂-C₄-Alkanoylamino, gegebenenfalls im Phenylring durch C₁-C₄-Alkyl, C₁-C₄-Alkoxy, Sulfo oder Halogen substituiertes Benzoylamino oder Sulfo sind,
R₁₄ Wasserstoff oder einen faserreaktiven Rest bedeutet, und
R₁₅ Wasserstoff, gegebenenfalls im Phenylring durch Nitro, C₁-C₄-Alkyl, C₁-C₄-Alkoxy oder Sulfo substituiertes Phenylamino, Hydroxy, Nitro oder einen faserreaktiven Rest bedeutet.

9. Azofarbstoffe gemäss einem der Ansprüche 7 und 8, dadurch gekennzeichnet, dass R₁₄ und R₁₅ als faserreaktiver Rest unabhängig voneinander je einen Rest der Formeln (5a), (5b), (5c) oder (5d)
-SO₂Z (5a),
-CONH-(CH₂)₂₋₃-SO₂Z (5b),
-NH-CO-CH(Hal)-CH₂-Hal (5c)
oder
-NH-CO-C(Hal)=CH₂ (5d),
bedeuten, worin
Z ein Rest der Formel -CH₂CH₂-U oder -CH=CH₂ und U eine Abgangsgruppe ist, und Hal Halogen bedeutet,

10. Azofarbstoffe gemäss Anspruch 9, dadurch gekennzeichnet, dass
U einen Rest -O-SO₃H und
Hal Chlor oder Brom bedeutet.

11. Azofarbstoffe gemäss einem der Ansprüche 1 bis 8, dadurch gekennzeichnet, dass D₁ einen Rest der Formeln (3a) oder (4a) 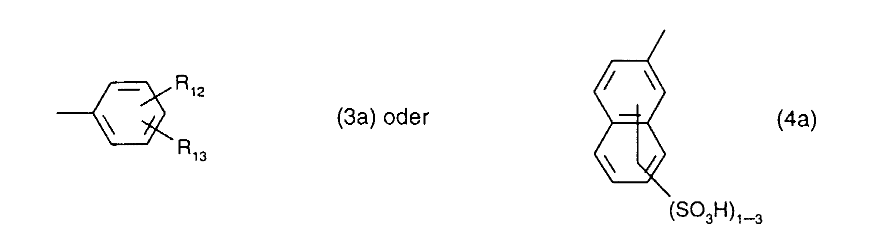 bedeutet, worin
R₁₂ und R₁₃ unabhängig voneinander je Wasserstoff, C₁-C₄-Alkyl, C₁-C₄-Alkoxy, Hydroxy, Carboxy, Carbamido, Ureido, C₂-C₄-Alkanoylamino, gegebenenfalls im Phenylring durch Sulfo substituiertes Benzoylamino oder Sulfo sind, und
D₂ ein Rest der Formeln (3b), (3c) 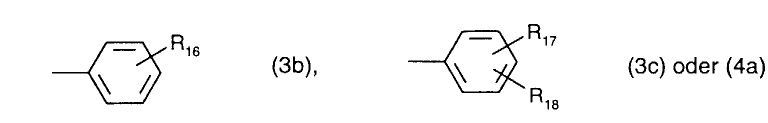 ist, worin
R₁₆ Wasserstoff, C₁-C₄-Alkyl, C₁-C₄-Alkoxy, Hydroxy, Carboxy, Carbamido, Ureido, C₂-C₄-Alkanoylamino oder gegebenenfalls im Phenylring durch Sulfo substituiertes Benzoylamino ist, und
R₁₇ und R₁₈ unabhängig voneinander je C₁-C₄-Alkyl, C₁-C₄-Alkoxy, Hydroxy, Carboxy, Carbamido, Ureido, C₂-C₄-Alkanoylamino, gegebenenfalls im Phenylring durch Sulfo substituiertes Benzoylamino oder Sulfo sind.

12. Azofarbstoffe gemäss Anspruch 11 dadurch gekennzeichnet, dass
R₁₂ und R₁₃ unabhängig voneinander je Wasserstoff, C₁-C₄-Alkyl, C₁-C₄-Alkoxy, Carboxy, C₂-C₃-Alkanoylamino oder Sulfo sind,
R₁₆ Wasserstoff, C₁-C₄-Alkyl, C₁-C₄-Alkoxy, Carboxy oder C₂-C₃-Alkanoylamino ist, und
R₁₇ und R₁₈ unabhängig voneinander je C₁-C₄-Alkyl, C₁-C₄-Alkoxy, Carboxy, C₂-C₃-Alkanoylamino oder Sulfo sind.

13. Azofarbstoffe gemäss einem der Ansprüche 1 bis 12, dadurch gekennzeichnet, dass der Farbstoff der Formel (1) einen Farbstoff der Formel (6) 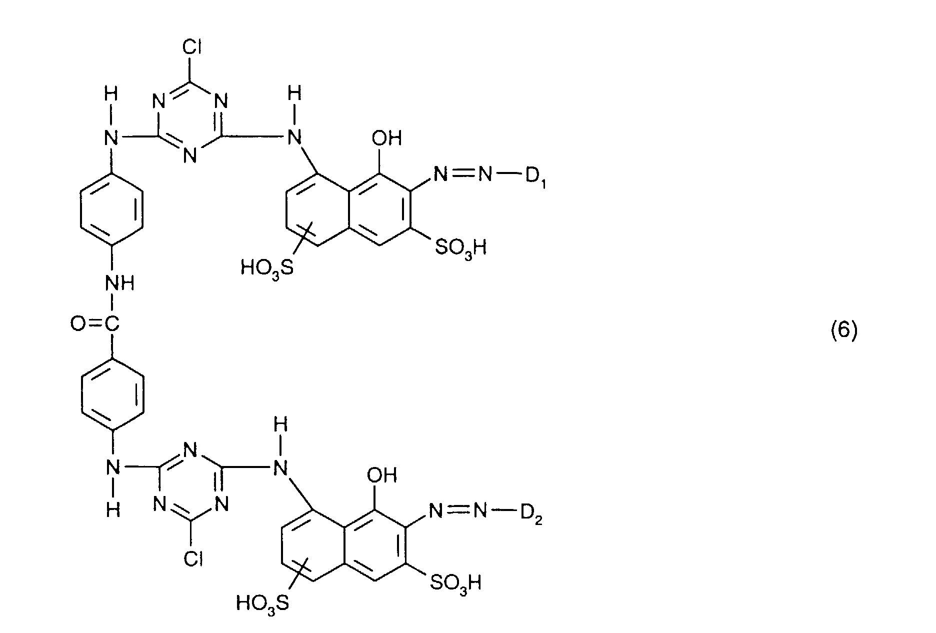 bedeutet, worin
D₁ und D₂ unabhängig voneinander je einen Rest der Formeln (3d) oder (4b) 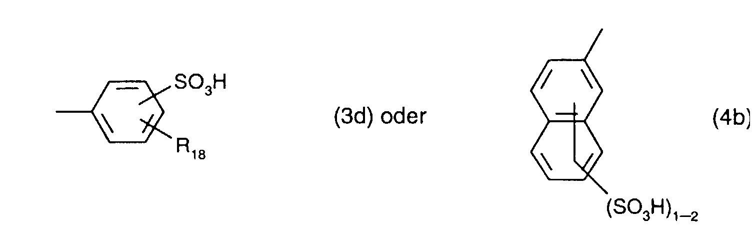 bedeuten,
wobei
R₁₈ C₁-C₄-Alkyl, C₁-C₄-Alkoxy, C₂-C₃-Alkanoylamino oder Sulfo ist.

14. Azofarbstoffe gemäss Anspruch 13, dadurch gekennzeichnet, dass
D₁ und D₂ einen Rest der Formel (3d) bedeuten, worin
R₁₈ Methyl, Methoxy, C₂-C₃-Alkanoylamino oder Sulfo ist.

15. Verfahren zur Herstellung von Azofarbstoffen der Formel (1) gemäss Anspruch 1, dadurch gekennzeichnet, dass man in etwa 1 Moläquivalent je einer Verbindung der Formeln (7a), (7b), (8a) und (8b)
D₁-NH₂ (7a),
D₂-NH₂ (7b), 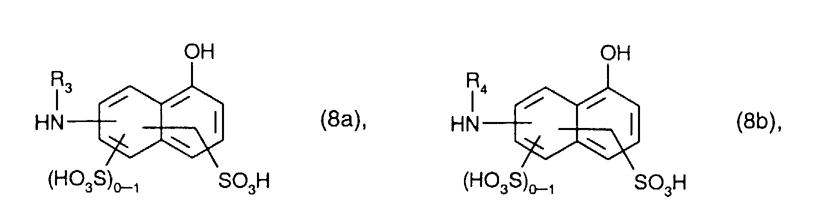
in etwa 2 Moläquivalente einer Verbindung der Formel (9) 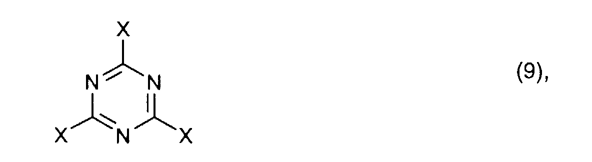 in etwa 1 Moläquivalent einer Verbindung der Formel (10) 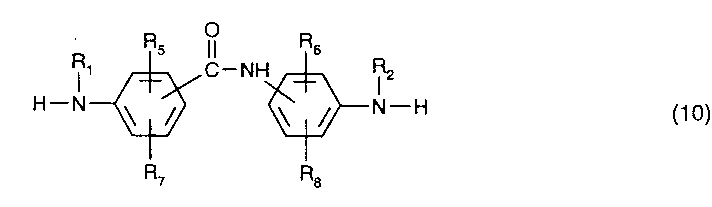 und
gegebenenfalls in etwa 1 Moläquivalent je einer Verbindung der Formeln (11) und (12)
Y₁'-H (11)
und
Y₂'-H (12)
in beliebiger Reihenfolge miteinander umsetzt, wobei die Reste R₁, R₂, R₃, R₄, R₅, R₆, R₇, R₈, D₁ und D₂ unabhängig voneinander je die im Anspruch 1 angegebenen Bedeutungen haben, X Halogen und Y₁' und Y₂' unabhängig voneinander die im Anspruch 1 für Y₁ und Y₂ angegebenen Bedeutungen ausser Halogen haben.

16. Verwendung von Azofarbstoffen der Formel (1) gemäss einem der Ansprüche 1 bis 14 bzw. der gemäss Anspruch 15 erhaltenen Azofarbstoffe der Formel (1) zum Färben oder Bedrucken von stickstoffhaltigen oder hydroxygruppenhaltigen Fasermaterialien.

17. Verwendung gemäss Anspruch 16, dadurch gekennzeichnet, dass man cellulosische Fasermaterialien, insbesondere baumwollhaltige Fasermaterialien färbt oder bedruckt.
